# EUROPEAN PATENT APPLICATION

(11) **EP 4 664 846 A1**
(43) Date of publication of application: **17.12.2025**
(21) Application number: 24763092.4
(22) Date of filing: 26.02.2024
(51) Int. Cl.: H04L 43/16

(54) **COMMUNICATION METHOD, APPARATUS AND SYSTEM**

(30) Priority: 27.02.2023 CN 202310231406
(71) Applicant: Huawei Technologies Co., Ltd., Shenzhen, Guangdong 518129 (CN)
(72) Inventor: WEN, Xuan, Shenzhen, Guangdong 518129 (CN); MA, Jingwang, Shenzhen, Guangdong 518129 (CN)
(74) Representative: Maiwald GmbH
(86) International application number: PCT/CN2024/078581
(87) International publication number: WO 2024/179410

(57) **Abstract**

This application provides a communication method, apparatus, and system, and pertains to the field of communication technologies. In the method, a frame usually includes a plurality of data packets, that is, a data packet set. There is a lag in transmission of a data packet set, that is, a period of time is needed for receiving a 1^{st} data packet in the data packet set to sending a last data packet by a network device. Therefore, the network device may determine a moment at which the network device receives the 1^{st} data packet in the data packet set and a moment at which a terminal device receives the last data packet in the data packet set. In other words, time during which the data packet set stays on the network device is considered, to accurately determine transmission duration of the data packet set or transmission duration of the frame, so that an MTP latency is ensured.

## Description

This application claims priority to Chinese Patent Application No. 202310231406.X, filed with the China National Intellectual Property Administration on February 27, 2023 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

In a virtual reality (virtual reality, VR) scenario, a cloud server may perform rendering to generate a computer graphics (computer graphics, CG) image based on a head motion of a user captured by a VR device, and send, via a network, the image to the VR device for display. In this case, a motion-to-photon (motion-to-photon, MTP) latency needs to be ensured. To be specific, duration from a moment at which a head of the user starts to move to a moment at which the VR device displays a corresponding image frame needs to be within 20 milliseconds (ms), to avoid dizziness of the user and impact on user experience.

Therefore, how to ensure the MTP latency is a research focus currently.

### SUMMARY

Embodiments of this application provide a communication method, apparatus, and system, to ensure an MTP latency.

To achieve the foregoing objective, the following technical solutions are used in this application.

According to a first aspect, a communication method is provided. The method includes: In a process in which a network device receives a first data packet set, the network device determines a moment at which the network device receives a 1^{st} data packet in the first data packet set. Then, the network device sends the first data packet set to a terminal device, and receives a moment at which the terminal device receives a last data packet in the first data packet set and that is returned by the terminal device. In this way, the network device determines transmission duration of the first data packet set based on the moment at which the network device receives the 1^{st} data packet in the first data packet set and the moment at which the terminal device receives the last data packet in the first data packet set.

It can be learned from the method according to the first aspect that, a frame usually includes a plurality of data packets, namely, a data packet set. There is a lag in transmission of a data packet set, that is, a period of time is needed for receiving a 1^{st} data packet in the data packet set to sending a last data packet by the network device. Therefore, the network device may determine the moment at which the network device receives the 1^{st} data packet in the data packet set and a moment at which the terminal device receives the last data packet in the data packet set. In other words, time during which the data packet set stays on the network device is considered, to accurately determine transmission duration of the data packet set or transmission duration of the frame, so that an MTP latency is ensured.

In a possible design scheme, the method according to the first aspect may further include: The network device receives first configuration information, where the first configuration information indicates that the network device needs to determine transmission duration of a data packet set, and the data packet set includes the first data packet set. In other words, whether the network device needs to record the transmission duration of the data packet set may be indicated by the configuration information, to implement on-demand recording and avoid recording redundancy.

Optionally, the first configuration information specifically indicates that the network device needs to determine transmission duration of a data packet set of a first service, and the data packet set of the first service includes the first data packet set. In this way, the transmission duration of the data packet set can be more flexibly determined by using a service as a granularity.

Optionally, the first configuration information further indicates at least one of the following: a moment at which the transmission duration of the data packet set starts to be determined, a moment at which the transmission duration of the data packet set stops being determined, or an interval between determining the transmission duration of the data packet set every two times. In other words, the time at which the network device starts to determine the transmission duration of the data packet set and the time at which the network device stops determining the transmission duration of the data packet set may be indicated by the configuration information, to implement on-demand starting or stopping and avoid performing a redundant procedure.

Further, the network device is a user plane network element, and the first configuration information is carried in an N4 message corresponding to the user plane network element. In other words, the existing message is reused, to reduce implementation difficulty. Alternatively, the first configuration information may be carried in a newly defined message, to implement decoupling from the existing message and more flexible information transmission.

In a possible design scheme, the method according to the first aspect may further include: When the transmission duration of the first data packet set is greater than a transmission duration threshold, the network device sends the transmission duration of the first data packet set, where the transmission duration threshold is transmission duration allowed by a data packet set of a first service, and the data packet set of the first service includes the first data packet set. In other words, in a timeout case, the network device may report the transmission duration, so that a service side can perform dynamic adjustment, for example, reduce a bit rate or resolution, to ensure user experience as much as possible.

Optionally, the method according to the first aspect may further include: The network device receives second configuration information, where the second configuration information indicates at least one of the following: the transmission duration threshold or a reporting rule, and the reporting rule is used to indicate that transmission duration of a data packet set needs to be reported when the transmission duration of the data packet set is greater than the transmission duration threshold. In other words, whether the network device needs to report and how to report the transmission duration of the data packet set may be indicated by the configuration information, to implement on-demand reporting and avoid communication redundancy.

Further, the network device is a user plane network element, and the second configuration information is carried in an N4 message corresponding to the user plane network element. In other words, the existing message is reused, to reduce implementation difficulty. Alternatively, the second configuration information may be carried in a newly defined message, to implement decoupling from the existing message and more flexible information transmission.

Optionally, the first service includes at least one of the following: an extended reality XR service, a virtual reality VR service, or any other possible service, to cover existing service scenarios and future service scenarios as much as possible.

In a possible design scheme, the first data packet set is one of at least one data packet set included in a first frame. It can be understood that, if the first frame includes one data packet set, namely, the first data packet set, transmission duration of the first frame may be determined by determining the transmission duration of the first data packet set, to ensure that transmission duration of each frame is controllable. If the first frame includes a plurality of data packet sets, transmission duration of each data packet set may be determined in the foregoing manner, and then transmission duration of the first frame is determined, to ensure that transmission duration of each frame is controllable.

According to a second aspect, a communication method is provided. The method includes: A terminal device receives third configuration information, where the third configuration information indicates the terminal device to feed back only a moment at which the terminal device receives a last data packet in a data packet set. In a process in which the terminal device receives a first data packet set from a network device, the terminal device sends, to the network device based on the third configuration information, a moment at which the terminal device receives a last data packet in the first data packet set, where the moment at which the last data packet is received is used to determine transmission duration of the first data packet set.

It can be learned from the method according to the second aspect that, the terminal generally needs to feed back a moment at which the terminal receives each data packet. However, after receiving the configuration information, the terminal may feed back, according to an indication of the configuration information, only the moment at which the terminal receives the last data packet in the data packet set, so that feedback overheads can be greatly reduced, and communication efficiency can be improved.

In a possible design scheme, a data packet set of a first service includes the first data packet set, so that feedback is more flexibly performed by using a service as a granularity.

In a possible design scheme, the third configuration information is carried in an N1 message. In other words, the existing message is reused, to reduce implementation difficulty. Alternatively, the third configuration information may be carried in a newly defined message, to implement decoupling from the existing message and more flexible information transmission.

According to a third aspect, a communication method is provided. The method includes: In a process in which a network device receives a first data packet set, the network device determines a moment at which the network device receives a 1^{st} data packet in the first data packet set. In a process in which the network device sends the first data packet set to a terminal device, the network device determines a moment at which the network device sends a last data packet in the first data packet set. In this way, the network device determines transmission duration of the first data packet set based on the moment at which the network device receives the 1^{st} data packet in the first data packet set, the moment at which the network device sends the last data packet in the first data packet set, and duration during which data packets are transmitted from the network device to the terminal device.

It can be learned from the method according to the third aspect that, a frame usually includes a plurality of data packets, namely, a data packet set. There is a lag in transmission of a data packet set, that is, a period of time is needed for receiving a 1^{st} data packet in the data packet set to sending a last data packet by the network device. Therefore, the network device may determine the moment at which the network device receives the 1^{st} data packet in the first data packet set and the moment at which the network device sends the last data packet in the first data packet set. In other words, time during which the data packet set stays on the network device is considered, to accurately determine transmission duration of the data packet set or transmission duration of the frame, so that an MTP latency is ensured.

In a possible design scheme, the method according to the third aspect may further include: The network device receives first configuration information, where the first configuration information indicates that the network device needs to determine transmission duration of a data packet set, and the data packet set includes the first data packet set.

Optionally, the first configuration information indicates that the network device needs to determine transmission duration of a data packet set of a first service, and the first data packet set belongs to the data packet set of the first service.

Optionally, the first configuration information further indicates at least one of the following: a moment at which the transmission duration of the data packet set starts to be determined, a moment at which the transmission duration of the data packet set stops being determined, or an interval between determining the transmission duration of the data packet set every two times.

Optionally, the network device is a user plane network element, and the first configuration information is carried in an N4 message corresponding to the user plane network element.

In a possible design scheme, the method according to the third aspect may further include: When the transmission duration of the first data packet set is greater than a transmission duration threshold, the network device sends the transmission duration of the first data packet set, where the transmission duration threshold is transmission duration allowed by a data packet set of a first service, and the data packet set of the first service includes the first data packet set.

Optionally, the method according to the third aspect may further include: The network device receives second configuration information, where the second configuration information indicates at least one of the following: the transmission duration threshold or a reporting rule, and the reporting rule is used to indicate that transmission duration of a data packet set needs to be reported when the transmission duration of the data packet set is greater than the transmission duration threshold.

Further, the network device is a user plane network element, and the second configuration information is carried in an N4 message corresponding to the user plane network element.

Optionally, the first service includes at least one of the following: an extended reality XR service or a virtual reality VR service.

In a possible design scheme, the first data packet set is one of at least one data packet set included in a first frame.

In addition, for technical effects of the method according to the third aspect, refer to the technical effects of the method according to the first aspect. Details are not described herein again.

According to a fourth aspect, a communication method is provided. The method includes: A policy control network element receives service requirement information from an application function, and sends a policy and charging control PCC rule to a session management network element based on the service requirement information. The service requirement information includes information indicating that transmission duration of a data packet set needs to be determined, and the transmission duration of the data packet set is a time period from a moment at which a user plane network element receives a 1^{st} data packet in the data packet set to a moment at which a terminal device receives a last data packet in the data packet set. The PCC rule includes the information indicating that the transmission duration of the data packet set needs to be determined.

It can be learned from the methods according to the fourth aspect and a fifth aspect that, whether the transmission duration is determined by using the data packet set as a granularity may be indicated by a service side like the application function by using the service requirement information, so that a network side, for example, the policy control network element and the session management network element, can configure a service of the user plane network element depending on a requirement, to avoid a redundant service.

In a possible design scheme, the service requirement information further includes information indicating that transmission duration of a data packet set of a first service needs to be determined, and correspondingly the PCC rule includes the information indicating that the transmission duration of the data packet set of the first service needs to be determined. In other words, the information indicating that the transmission duration of the data packet set of the first service needs to be determined may be directly encapsulated into the PCC rule, to reduce implementation difficulty. Alternatively, the information that is in the PCC rule and that indicates that the transmission duration of the data packet set of the first service needs to be determined may be newly generated information. This is not limited.

In a possible design scheme, the service requirement information further includes at least one of the following: a transmission duration threshold or a reporting rule, the reporting rule is used to indicate that transmission duration of a data packet set needs to be reported when the transmission duration of the data packet set is greater than the transmission duration threshold, and correspondingly the PCC rule further includes at least one of the following: the transmission duration threshold or the reporting rule. Likewise, the transmission duration threshold and/or the reporting rule may be directly encapsulated into the PCC rule, to reduce implementation difficulty. Alternatively, the transmission duration threshold and/or the reporting rule in the PCC rule may be newly generated information. This is not limited.

According to a fifth aspect, a communication method is provided. The method includes: A session management network element receives a PCC rule from a policy control network element, and sends first configuration information to a user plane network element based on the PCC rule. The PCC rule includes information indicating that transmission duration of a data packet set needs to be determined, and the transmission duration of the data packet set is a time period from a moment at which the user plane network element receives a 1^{st} data packet in the data packet set to a moment at which a terminal device receives a last data packet in the data packet set. The first configuration information indicates that the user plane network element needs to determine the transmission duration of the data packet set.

In a possible design scheme, the PCC rule includes information indicating that transmission duration of a data packet set of a first service needs to be determined, and correspondingly the first configuration information indicates that the user plane network element needs to determine the transmission duration of the data packet set of the first service. In other words, the information indicating that the transmission duration of the data packet set of the first service needs to be determined may be directly encapsulated into the first configuration information, to reduce implementation difficulty. Alternatively, the information that is in the first configuration information and that indicates that the transmission duration of the data packet set of the first service needs to be determined may be newly generated information. This is not limited.

Optionally, the first configuration information further indicates at least one of the following: a moment at which the transmission duration of the data packet set of the first service starts to be determined, a moment at which the transmission duration of the data packet set of the first service stops being determined, or an interval between determining the transmission duration of the data packet set of the first service every two times.

Optionally, the first configuration information is carried in an N4 message corresponding to the user plane network element.

In a possible design scheme, the PCC rule further includes at least one of the following: a transmission duration threshold or a reporting rule, and the reporting rule is used to indicate that transmission duration of a data packet set needs to be reported when the transmission duration of the data packet set is greater than the transmission duration threshold. Correspondingly, the method according to the fifth aspect may further include: The session management network element sends second configuration information to the user plane network element based on the PCC rule, where the second configuration information indicates at least one of the following: the transmission duration threshold or the reporting rule. In other words, the transmission duration threshold and/or the reporting rule may be directly encapsulated into the second configuration information, to reduce implementation difficulty. Alternatively, the transmission duration threshold and/or the reporting rule in the second configuration information may be newly generated information. This is not limited.

Optionally, the second configuration information is carried in an N4 message corresponding to the user plane network element.

In a possible design scheme, the method according to the fifth aspect may further include: The session management network element sends third configuration information to the terminal device based on the PCC rule, where the third configuration information indicates the terminal device to feed back only a moment at which the terminal device receives a last data packet in a data packet set, and the moment at which the last data packet is received is used to determine transmission duration of the data packet set.

Optionally, the PCC rule includes information indicating that transmission duration of a data packet set of a first service needs to be determined, and correspondingly the third configuration information indicates the terminal device to feed back only a moment at which the terminal device receives a last data packet in the data packet set of the first service. In other words, the information indicating that the transmission duration of the data packet set of the first service needs to be determined may be reused to implicitly indicate the terminal device to feed back only the moment at which the terminal device receives the last data packet in the data packet set of the first service, to reduce overheads.

Optionally, the third configuration information is carried in an N1 message corresponding to the terminal device.

In addition, for other technical effects of the method according to the fifth aspect, refer to the technical effects of the method according to the first aspect. Details are not described herein again.

According to a sixth aspect, a communication apparatus is provided. The communication apparatus includes modules configured to perform the method according to the first aspect, for example, a transceiver module and a processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module, and the storage module stores a program or instructions. When the processing module executes the program or instructions, the communication apparatus is enabled to perform the method according to the first aspect.

It can be understood that the communication apparatus according to the sixth aspect may be a network device, for example, a user plane network element, may be a chip (system) or another component or part that may be disposed in the network device, or may be an apparatus that includes the network device. This is not limited in this application.

In addition, for technical effects of the communication apparatus according to the sixth aspect, refer to the technical effects of the method according to the first aspect. Details are not described herein again.

According to a seventh aspect, a communication apparatus is provided. The communication apparatus includes modules configured to perform the method according to the second aspect, for example, a transceiver module and a processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the seventh aspect, and the receiving module is configured to implement a receiving function of the communication apparatus according to the seventh aspect.

Optionally, the communication apparatus according to the seventh aspect may further include a storage module, and the storage module stores a program or instructions. When the processing module executes the program or instructions, the communication apparatus is enabled to perform the method according to the second aspect.

It can be understood that the communication apparatus according to the seventh aspect may be a terminal device, may be a chip (system) or another component or part that may be disposed in the terminal device, or may be an apparatus that includes the terminal device. This is not limited in this application.

In addition, for technical effects of the communication apparatus according to the seventh aspect, refer to the technical effects of the method according to the second aspect. Details are not described herein again.

According to an eighth aspect, a communication apparatus is provided. The communication apparatus includes modules configured to perform the method according to the third aspect, for example, a transceiver module and a processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the eighth aspect, and the receiving module is configured to implement a receiving function of the communication apparatus according to the eighth aspect.

Optionally, the communication apparatus according to the eighth aspect may further include a storage module, and the storage module stores a program or instructions. When the processing module executes the program or instructions, the communication apparatus is enabled to perform the method according to the third aspect.

It can be understood that the communication apparatus according to the eighth aspect may be a network device, for example, a user plane network element, may be a chip (system) or another component or part that may be disposed in the network device, or may be an apparatus that includes the network device. This is not limited in this application.

In addition, for technical effects of the communication apparatus according to the eighth aspect, refer to the technical effects of the method according to the third aspect. Details are not described herein again.

According to a ninth aspect, a communication apparatus is provided. The communication apparatus includes modules configured to perform the method according to the fourth aspect, for example, a transceiver module and a processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the ninth aspect, and the receiving module is configured to implement a receiving function of the communication apparatus according to the ninth aspect.

Optionally, the communication apparatus according to the ninth aspect may further include a storage module, and the storage module stores a program or instructions. When the processing module executes the program or instructions, the communication apparatus is enabled to perform the method according to the fourth aspect.

It can be understood that the communication apparatus according to the ninth aspect may be a network device, for example, a policy control network element, may be a chip (system) or another component or part that may be disposed in the network device, or may be an apparatus that includes the network device. This is not limited in this application.

In addition, for technical effects of the communication apparatus according to the ninth aspect, refer to the technical effects of the method according to the fourth aspect. Details are not described herein again.

According to a tenth aspect, a communication apparatus is provided. The communication apparatus includes modules configured to perform the method according to the fifth aspect, for example, a transceiver module and a processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the tenth aspect, and the receiving module is configured to implement a receiving function of the communication apparatus according to the tenth aspect.

Optionally, the communication apparatus according to the tenth aspect may further include a storage module, and the storage module stores a program or instructions. When the processing module executes the program or instructions, the communication apparatus is enabled to perform the method according to the fifth aspect.

It can be understood that the communication apparatus according to the tenth aspect may be a network device, for example, a session management network element, may be a chip (system) or another component or part that may be disposed in the network device, or may be an apparatus that includes the network device. This is not limited in this application.

In addition, for technical effects of the communication apparatus according to the tenth aspect, refer to the technical effects of the method according to the fifth aspect. Details are not described herein again.

According to an eleventh aspect, a communication apparatus is provided. The communication apparatus includes a processor. The processor is configured to perform the method according to any one of the possible implementations of the first aspect to the fifth aspect.

In a possible design scheme, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In a possible design scheme, the communication apparatus according to the eleventh aspect may further include a memory. The memory and the processor may be integrated, or may be disposed separately. The memory may be configured to store a computer program and/or data related to the method according to any one of the possible implementations of the first aspect to the fifth aspect.

In this embodiment of this application, the communication apparatus according to the eleventh aspect may be a terminal device or a network device, may be a chip (system) or another component or part that may be disposed in the terminal device or the network device, or may be an apparatus that includes the terminal device or the network device.

In addition, for technical effects of the communication apparatus according to the eleventh aspect, refer to the technical effects of the method according to any one of the possible implementations of the first aspect to the fifth aspect. Details are not described herein again.

According to a twelfth aspect, a communication apparatus is provided. The communication apparatus includes a processor. The processor is coupled to a memory, and the processor is configured to execute a computer program stored in the memory, so that the communication apparatus performs the method according to any one of the possible implementations of the first aspect or the second aspect.

In a possible design scheme, the communication apparatus according to the twelfth aspect may further include a transceiver. The transceiver may be a transceiver circuit or an interface circuit. The transceiver may be used by the communication apparatus according to the twelfth aspect to communicate with another communication apparatus.

In this embodiment of this application, the communication apparatus according to the twelfth aspect may be a terminal device or a network device, may be a chip (system) or another component or part that may be disposed in the terminal device or the network device, or may be an apparatus that includes the terminal device or the network device.

In addition, for technical effects of the communication apparatus according to the twelfth aspect, refer to the technical effects of the method according to any one of the possible implementations of the first aspect to the fifth aspect. Details are not described herein again.

According to a thirteenth aspect, a communication apparatus is provided, including a processor and a memory. The memory is configured to store a computer program. When the processor executes the computer program, the communication apparatus is enabled to perform the method according to any one of the possible implementations of the first aspect to the fifth aspect.

In a possible design scheme, the communication apparatus according to the thirteenth aspect may further include a transceiver. The transceiver may be a transceiver circuit or an interface circuit. The transceiver may be used by the communication apparatus according to the thirteenth aspect to communicate with another communication apparatus.

In this embodiment of this application, the communication apparatus according to the thirteenth aspect may be a terminal device or a network device, may be a chip (system) or another component or part that may be disposed in the terminal device or the network device, or may be an apparatus that includes the terminal device or the network device.

In addition, for technical effects of the communication apparatus according to the thirteenth aspect, refer to the technical effects of the method according to any one of the possible implementations of the first aspect to the fifth aspect. Details are not described herein again.

According to a fourteenth aspect, a communication system is provided. The communication system includes a terminal device, a user plane network element, a policy control network element, or a session management network element. The user plane network element is configured to perform the method according to any one of the implementations of the first aspect or the third aspect. The terminal device is configured to perform the method according to any one of the implementations of the second aspect. The policy control network element is configured to perform the method according to any one of the implementations of the fourth aspect. The session management network element is configured to perform the method according to any one of the implementations of the fifth aspect.

According to a fifteenth aspect, a computer-readable storage medium is provided, including a computer program or instructions. When the computer program or instructions are run on a computer, the computer is enabled to perform the method according to any one of the possible implementations of the first aspect to the fifth aspect.

According to a sixteenth aspect, a computer program product is provided, including a computer program or instructions. When the computer program or instructions are run on a computer, the computer is enabled to perform the method according to any one of the possible implementations of the first aspect to the fifth aspect.

### BRIEF DESCRIPTION OF DRAWINGS

FIG. 1 is a diagram of an architecture of a 5GS;
FIG. 2 is a diagram of a data connection session;
FIG. 3 is a diagram 1 of an architecture of a QoS flow;
FIG. 4 is a diagram 2 of an architecture of a QoS flow;
FIG. 5 is a schematic flowchart of a cloud VR service of a VR device;
FIG. 6 is a diagram of an architecture of a communication system according to an embodiment of this application;
FIG. 7 is a schematic flowchart 1 of a communication method according to an embodiment of this application;
FIG. 8 is a schematic flowchart 2 of a communication method according to an embodiment of this application;
FIG. 9 is a schematic flowchart 3 of a communication method according to an embodiment of this application;
FIG. 10 is a schematic flowchart 4 of a communication method according to an embodiment of this application;
FIG. 11 is a diagram 1 of a structure of a communication apparatus according to an embodiment of this application; and
FIG. 12 is a diagram 2 of a structure of a communication apparatus according to an embodiment of this application.

### DESCRIPTION OF EMBODIMENTS

For ease of understanding, the following first describes technical terms in embodiments of this application.

### 1. 5th generation (5th generation, 5G) mobile communication system (referred to as a 5G system (5G system, 5GS) for short):

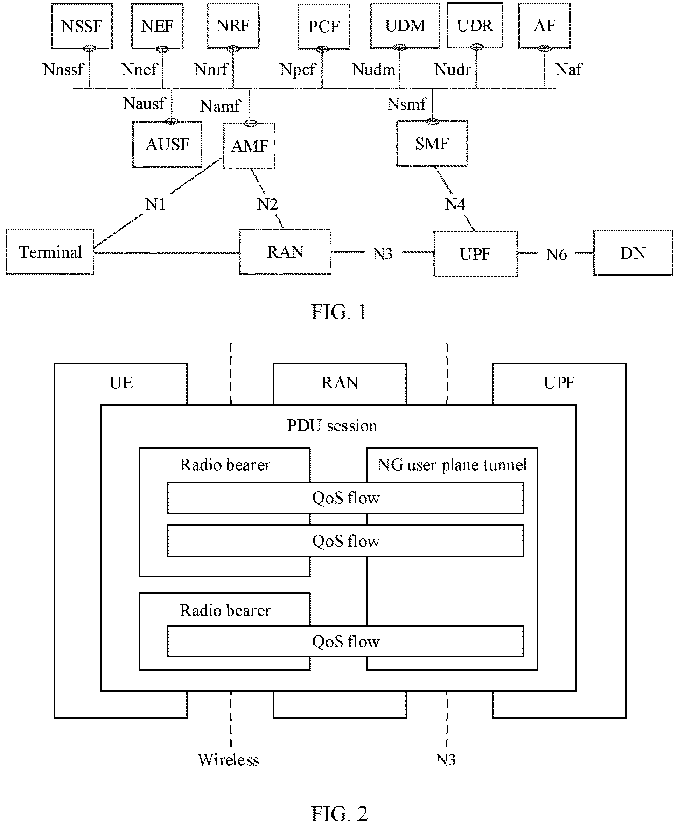

FIG. 1 is a diagram of an architecture of a 5GS. As shown in FIG. 1, the 5GS includes an access network (access network, AN) and a core network (core network, CN), and may further include a terminal device.

The terminal device may be a terminal device having receiving and sending functions, or may be a chip or a chip system that may be disposed in the terminal device. The terminal device may also be referred to as a user equipment (user equipment, UE), an access terminal, a subscriber unit (subscriber unit), a subscriber station, a mobile station (mobile station, MS), a mobile console, a remote station, a remote terminal, a mobile device, a user terminal, a terminal, a wireless communication device, a user agent, or a user apparatus. The terminal in this embodiment of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having wireless receiving and sending functions, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. The terminal device in this application may be alternatively a vehicle-mounted module, a vehicle-mounted component, a vehicle-mounted chip, or a vehicle-mounted unit that is built in a vehicle as one or more components or units.

The foregoing AN is used for implementing an access-related function, may provide a network access function for an authorized user in a specific area, and can determine transmission links with different quality based on a user level, a service requirement, and the like, to transmit user data. The AN forwards a control signal and user data between the terminal and the CN. The AN may include an access network device, or may be referred to as a radio access network (radio access network, RAN) device. The CN is mainly responsible for maintaining subscription data of a mobile network, and provides session management, mobility management, policy management, security authentication, and other functions for the terminal device. The CN mainly includes a user plane function (user plane function, UPF), an authentication server function (authentication server function, AUSF), an access and mobility management function (access and mobility management function, AMF), a session management function (session management function, SMF), a network slice selection function (network slice selection function, NSSF), a network exposure function (network exposure function, NEF), a network repository function (network repository function, NRF), a policy control function (policy control function, PCF), unified data management (unified data management, UDM), a unified data repository (unified data repository, UDR), and an application function (application function, AF).

As shown in FIG. 1, the UE accesses a 5G network via the RAN device. The UE communicates with the AMF through an N1 interface (N1 for short). The RAN communicates with the AMF through an N2 interface (N2 for short). The RAN communicates with the UPF through an N3 interface (N3 for short). The SMF communicates with the UPF through an N4 interface (N4 for short). The UPF accesses a data network (data network, DN) through an N6 interface (N6 for short). In addition, control plane functions such as the AUSF, the AMF, the SMF, the NSSF, the NEF, the NRF, the PCF, the UDM, the UDR, and the AF shown in FIG. 1 interact with each other through service based interfaces. For example, a service based interface exhibited by the AUSF includes Nausf, a service based interface exhibited by the AMF includes Namf, a service based interface exhibited by the SMF includes Nsmf, a service based interface exhibited by the NSSF includes Nnssf, a service based interface exhibited by the NEF includes Nnef, a service based interface exhibited by the NRF includes Nnrf, a service based interface exhibited by the PCF includes Npcf, a service based interface exhibited by the UDM includes Nudm, a service based interface exhibited by the UDR includes Nudr, and a service based interface exhibited by the AF includes Naf.

The RAN device may be a device that provides access for the terminal device. For example, the RAN device may include an access network device in a next generation mobile communication system like 6G, for example, a 6G base station. Alternatively, in the next generation mobile communication system, the network device may be named in another manner, which falls within the protection scope of this embodiment of this application. This is not limited in this application. Alternatively, the RAN device may include a gNB in 5G, for example, a new radio (new radio, NR) system, or one antenna panel or a group of antenna panels (including a plurality of antenna panels) of a gNB in 5G, or may be a network node that forms a gNB, a transmission point (transmission reception point, TRP, or transmission point, TP), or a transmission measurement function (transmission measurement function, TMF), for example, a baseband unit (building baseband unit, BBU), a central unit (central unit, CU), or a distributed unit (distributed unit, DU), an RSU having a base station function, a wired access gateway, or a 5G core network. Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like.

The UPF is mainly responsible for user data handling (forwarding, receiving, charging, and the like). For example, the UPF may receive user data from a data network (data network, DN), and forward the user data to the terminal via the access network device. The UPF may also receive user data from the terminal via the access network device, and forward the user data to the DN. The DN is an operator network that provides a data transmission service for a user, for example, an internet protocol (internet protocol, IP) multi-media service (IP multi-media service, IMS) or an internet (internet). The DN may be an external network of an operator or may be a network controlled by an operator, and is configured to provide services for the terminal device. In a protocol data unit (protocol data unit, PDU) session, the UPF that is directly connected to the DN through N6 is also referred to a protocol data unit session anchor (protocol data unit session anchor, PSA).

The AUSF is mainly configured to perform security authentication on the terminal device.

The AMF is mainly configured for mobility management in the mobile network, for example, user location update, registration of a user with a network, and user handover.

The SMF is mainly configured for session management in the mobile network, for example, session establishment, modification, and release. Specific functions are, for example, allocation of an internet protocol (internet protocol, IP) address to a user, and selection of a UPF that provides a data packet forwarding function.

The PCF mainly supports a unified policy framework to govern network behaviors, provides policy rules for a control layer network function, and is responsible for accessing user subscription information related to policy decisions. The PCF may provide the AMF and the SMF with policies, for example, a quality of service (quality of service, QoS) policy and a slice selection policy.

The NSSF is mainly configured to select a network slice for the terminal device.

The NEF is mainly configured to support exposure of capabilities and events. For example, the NEF may expose some capabilities of the 5G network to a third-party application through an application programming interface (application programming interface, API), and the third-party application obtains some capabilities of the 5G network by using the AF by invoking the API provided by the NEF, so that the third-party application can control some behaviors of the 5G network and the terminal device.

The UDM is mainly configured to store user data, for example, subscription data and authentication/authorization data.

The UDR is mainly configured to store structured data. Stored content includes subscription data, policy data, structured data for exposure, and application-related data.

The AF mainly supports interaction with the CN to provide services, for example, impact on data routing decision-making, a policy control function, provision of a third-party for a network side, or some other services.

It can be understood that the functions mentioned in this embodiment of this application may also be represented as functional network elements or functional entities. For example, the UPF may be represented as a UPF network element, the AMF may be represented as an AMF network element, the SMF may be represented as an SMF network element, and the PCF may be represented as a PCF network element. The rest may be deduced by analogy. This is not limited.

### 2. QoS:

A UE and a UPF may establish a data connection session (for example, a protocol data unit (protocol data unit, PDU) session (session), or may be another session like an IP-CAN session). The PDU session is used as an example for description of methods in the following. For a PDU session, a QoS flow (flow) is a minimum granularity for QoS differentiation. The QoS flow may be a QoS flow that supports guaranteed bit rate (guaranteed bit rate, GBR) QoS, namely, a GBR QoS flow, or a QoS flow that supports non-guaranteed bit rate (non-guaranteed bit rate, non-GBR) QoS, namely, a non-GBR QoS flow. One PDU session may include a plurality of QoS flows. For example, a maximum of 64 QoS flows are supported. Each QoS flow has a corresponding QoS flow identifier (QoS flow ID, QFI), to distinguish between different QoS flows. User plane service flows with a same QFI may be mapped to a same QoS flow, so that a same service forwarding processing mode (for example, scheduling) is used for processing the user plane service flows.

FIG. 2 is a diagram of a data connection session. As shown in FIG. 2, one data connection session, for example, a PDU session, may be corresponding to a plurality of radio bearers (radio bearers, RBs) on an air interface, and one radio bearer may further include one or more QoS flows, that is, carry one or more QoS flows.

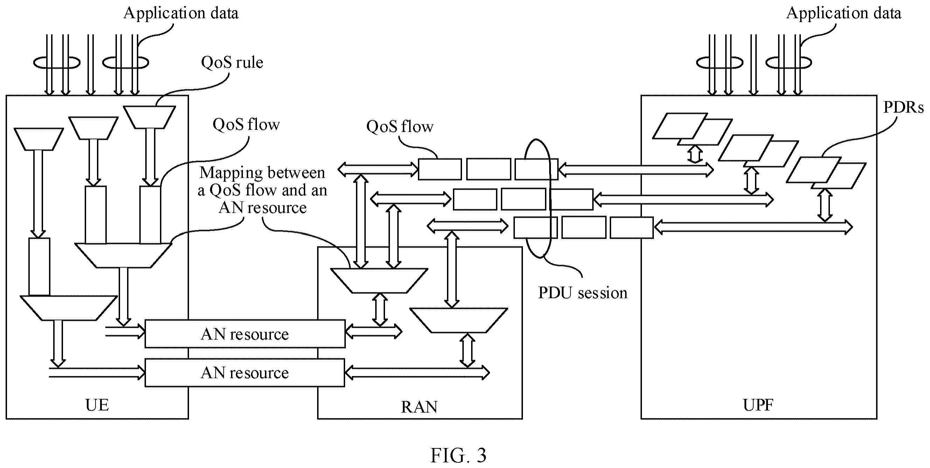

FIG. 3 is a diagram 1 of an architecture of a QoS flow. As shown in FIG. 3, a QoS profile is at a QoS flow level, that is, configuration is performed at a granularity of a QoS flow. For example, characteristics of the QoS flow may be indicated by using some parameters, and an SMF preconfigures, establishes, or modifies a corresponding QoS flow by configuring these parameters. For example, for a QoS flow, these parameters include a QoS profile (QoS profile) on a RAN device side, a QoS rule (QoS rule) on a UE side, and a packet detection rule (packet detection rule, PDR) and a QoS enforcement rule (QoS enforcement rule, QER) that are on a UPF side.

The QoS profile includes an uplink QoS profile and/or a downlink QoS profile, and is configured by the SMF to a RAN device through an N2 interface, or is preconfigured by the RAN device. In an example, the QoS profile may include a 5G quality identifier (5G quality identity, 5QI), an allocation and retention priority (allocation and retention priority, ARP), a guaranteed flow bit rate (guaranteed flow bit rate, GFBR), a maximum flow bit rate (maximum flow bit rate, MFBR), a maximum packet loss rate (maximum packet loss rate, MPLR), and a reflective QoS attribute (reflective QoS attribute, RQA).

The 5QI indicates a radio characteristic of the QoS flow. For example, the 5QI includes at least one of the following: a resource type, a priority, a packet delay budget (packet delay budget, PDB), a packet error rate (packet error rate, PER), an averaging window, or a maximum data burst (maximum data burst, MDB) volume. The resource type indicates a type of the QoS flow. For example, the QoS flow is a GBR QoS flow or includes a non-GBR QoS flow. The priority indicates a scheduling priority of the QoS flow on an air interface, and may be specifically priorities of QoS flows of different UEs or priorities of different QoS flows of a same UE. The PDB indicates an upper limit of a possible delay time of a data packet of the QoS flow between a UE and a UPF (a UPF used as an N6 termination point). The PDB may include: a packet delay budget of an access network (AN PDB) and a packet delay budget of a core network (CN PDB). The AN PDB is a packet delay budget between the UE and the AN, that is, the RAN device. The CN PDB is a packet delay budget between the AN and the UPF used as the N6 termination point. The AN PDB may be determined by subtracting the CN PDB from the PDB. The averaging window is a time period used to determine a GFBR and an MFBR of the GBR QoS flow. The MDB indicates a maximum volume of data that the AN needs to serve or perform transmission in a periodicity of the AN PDB.

The ARP indicates a priority of the QoS flow on a next generation (next generation, NG) interface, where the priority may be specifically priorities of QoS flows of different UEs or priorities of different QoS flows of a same UE.

The GFBR indicates a guaranteed data rate for the GBR QoS flow, where the guaranteed data rate includes an uplink guaranteed data rate and a downlink guaranteed data rate. The MFBR indicates a maximum data rate for the GBR QoS flow, where the maximum data rate includes an uplink maximum data rate and a downlink maximum data rate.

The MPLR indicates a maximum packet loss rate that can be tolerated by a QoS flow. The MPLR is applicable only to GBR QoS.

The reflective QoS attribute indicates whether an uplink of the non-GBR QoS flow complies with mirror mapping, that is, whether an uplink QoS rule can be reflectively derived from a downlink QoS rule.

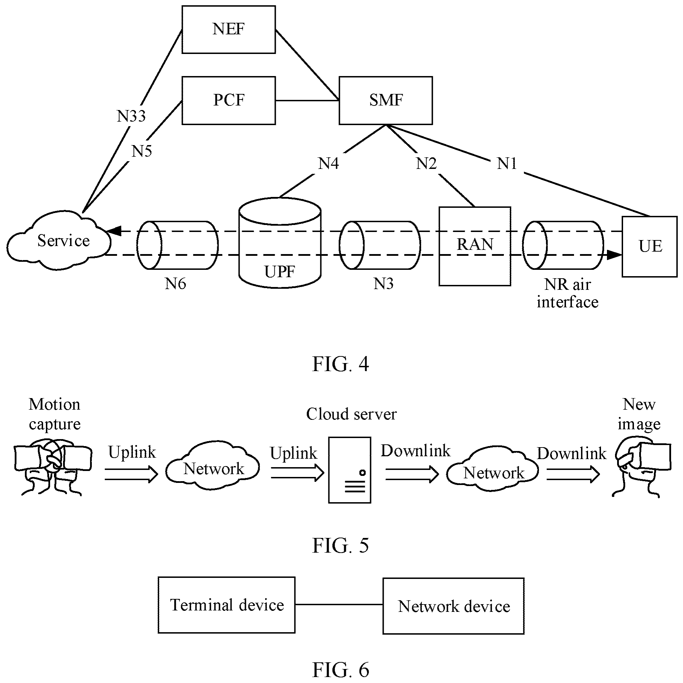

FIG. 4 is a diagram 2 of an architecture of a QoS flow. As shown in FIG. 4, a QoS rule is mainly used by a UE to classify and mark uplink user plane data services. For example, uplink data is associated with a corresponding QoS flow based on the QoS rule. The QoS rule may include a QFI of a QoS flow associated with the QoS rule, a data packet filter set (filter list) corresponding to the QoS flow, and a priority of the QoS flow. The data packet filter set is mainly used to associate uplink data with a corresponding QoS flow. For example, if an ID (for example, an IP 5-tuple) of an uplink data packet matches an ID in the data packet filter set, that is, the uplink data packet matches a corresponding QoS rule, the UE associates the uplink data packet with a QoS flow corresponding to the QoS rule. If the ID of the uplink data packet does not match the ID in the data packet filter set, that is, the uplink data packet does not match a corresponding QoS rule, the UE discards the uplink data. The QoS rule may be configured by an SMF to the UE through an N1 interface, or may be derived by the UE by using a reflective QoS mechanism. If a downlink QoS rule is configured, the UE derives an uplink QoS rule based on the downlink QoS rule. In addition, one QoS flow may have a plurality of QoS rules. One default QoS rule may be configured for each PDU session, and the default QoS rule is associated with one QoS flow.

A PDR is configured by the SMF to a UPF through an N4 interface. The PDR may include an uplink PDR and a downlink PDR. The uplink PDR is used by the UPF to classify and mark uplink user plane data services. For example, as shown in FIG. 4, the UPF associates uplink data with a corresponding QoS flow based on the uplink PDR. The downlink PDR is used by the UPF to classify and mark downlink user plane data services. For example, as shown in FIG. 4, the UPF associates downlink data with a corresponding QoS flow based on the downlink PDR. If a data packet does not match any uplink PDR or downlink PDR, the UPF discards the data packet. A QER is configured by the SMF to the UPF through the N4 interface. The QER may be associated with the PDR, and is used by the UPF to control a corresponding QoS flow. For example, after the UPF associates the downlink data with the corresponding QoS flow based on the downlink PDR, the UPF may perform rate control on the QoS flow by using a QER associated with the downlink PDR. For example, the downlink data is transmitted based on a GFBR and an MFBR.

It can be understood that a data flow is an IP flow at an IP layer, the data flow is a QoS flow at a non-access stratum (non-access stratum, NAS), and the data flow is a data radio bearer (data radio bearer, DRB) at an access stratum (access stratum, AS). Therefore, there are two mapping relationships for the QoS flow: a mapping relationship between the QoS flow and the IP flow and a mapping relationship between the QoS flow and the DRB.

### 3. Mapping mechanism:

The mapping mechanism is a process of associating a service data flow with a QoS flow considered to be used for transmission of the service data flow. The service data flow is defined in a PCC rule by using a service data flow (service data flow, SDF) model. The mapping mechanism includes the following steps:
Step 1: Perform session mapping. To be specific, a one-to-one correspondence is established between an application function session (AF session) and a PDU session.
Step 2: Perform PCC rule authorization. To be specific, a PCF authorizes the PCC rule, and allocates a QoS parameter for the PCC rule.
Step 3: Perform QoS flow mapping. To be specific, the PCC rule is associated with a QoS flow in the PDU session. The QoS flow mapping is performed by using the following mapping parameters: a 5QI, an ARP, QoS notification control (QoS notification control, QNC) (if available in the PCC rule), a priority (if available in the PCC rule), an averaging window (if available in the PCC rule), and a maximum data burst volume (maximum data burst volume, MDBV) (if available in the PCC rule).

For example, when the PCF provides the PCC rule, an SMF may determine whether there is a QoS flow whose QoS parameter is the same as the mapping parameter in step 3. If there is no such QoS flow, the SMF determines a QoS parameter of a new QoS flow by using the parameter in the PCC rule, and establishes the new QoS flow based on the QoS parameter. In this case, the PCC rule is mapped to the new QoS flow. If there is a QoS flow whose QoS parameter is the same as the mapping parameter, the SMF maps the PCC rule to the existing QoS flow. In addition, if the PCF requests to map the PCC rule to a QoS flow associated with a default QoS rule, the SMF may not perform the foregoing determining.

Moreover, "mapping" is merely an example description, and may be replaced with any other possible description, for example, "binding" or "corresponding". This is not specifically limited.

### 4. QoS monitoring (monitoring) mechanism:

The 3rd Generation Partnership Project (3rd generation partnership project, 3GPP) defines the QoS monitoring mechanism to measure a transmission latency of a data packet from a UPF to a RAN device and a transmission latency of the data packet from the RAN device to a UE, to obtain a transmission latency from the UPF to the UE by combining the transmission latencies. For example, in a process in which the UPF receives a data packet #1 from a DN and sends the data packet #1 to the RAN device, the UPF may record a moment at which the data packet #1 is sent, namely, a timestamp #1. After receiving the data packet #1, the RAN device may feed back, to the UPF, a moment at which the RAN device receives the data packet #1, namely, a timestamp #2; and may further feed back, to the UPF, a moment at which the RAN device performs current feedback, namely, a timestamp #3. After receiving the feedbacks from the RAN device, the UPF may also record a moment at which the UPF receives the feedbacks from the RAN device, namely, a timestamp #4. In this way, the UPF may determine a transmission latency #1 of the data packet #1 from the RAN device to the UE based on the timestamp #1, the timestamp #2, the timestamp #3, and the timestamp #4. For example, the transmission latency #1 is (the timestamp #2-the timestamp #1+the timestamp #4-the timestamp #3)/2. Likewise, the RAN device may also determine, in a manner similar to that used by the UPF, a transmission latency #2 of the data packet #1 from the RAN device to the UE. The transmission latency #1+the transmission latency #2 is a transmission latency #3 of the data packet #1 from the UPF to the UE.

In other words, the QoS monitoring mechanism is a detection mechanism using a data packet as a granularity, and is used to detect a transmission latency of each data packet from the UPF to the UE.

### 5. Service:

With continuous development of a 5GS, a data transmission latency of the 5GS is continuously reduced, and a transmission capacity is becoming larger. Some services that have high real-time quality and high data capacity requirements, such as extended reality (extended reality, XR) and tactile internet services, have gradually been introduced into the 5GS. Typical XR is virtual reality (virtual reality, VR). The VR is a transformative technology that radically transforms content consumption and communication consumption. The VR technology provides users with more in-depth and immersive experience by blocking users' sight and immersing users' senses in independent and new virtual space. Currently, the VR has been applied to education, entertainment, military affairs, medical care, environmental protection, transportation, public health, and other fields closely related to people's production and life.

The VR is classified into two types of services. One type is a panoramic video service, which is usually applied to scenarios such as live broadcast of sports events, concerts, and movies. For this type of service, a plurality of cameras are used to perform collection and splicing to restore a 2D video to a panoramic view, and play the panoramic view on a VR device in streaming media mode. The other type is a real-time rendering service, which is used to perform real-time computer graphics (computer graphics, CG) rendering based on a head motion and/or an operation motion of a user and by using computer hardware, for example, a graphics processing unit (graphics processing unit, GPU), to generate a corresponding virtual environment. This type of service is a system simulation of a multi-source information fusion, interactive three-dimensional dynamic views, and entity behaviors, so that the user is immersed in the environment. The real-time rendering service may also be referred to as CG-type VR or a CG-type VR service.

For example, FIG. 5 is a schematic flowchart of CG-type VR. As shown in FIG. 5, a VR device may capture motion information of a user, for example, a head motion, a hand motion, and a squatting/standing motion, and send the motion information to a cloud server via a network (for example, a 5G network). The cloud server performs rendering to generate a CG image based on the motion information of the user, and sends, via the network, the CG image to the VR device for display. A motion-to-photon (motion-to-photon, MTP) latency is a key requirement of the CG-type VR, and is a latency from a moment at which the head/hand motion is detected to a moment at which the cloud server renders the corresponding CG image and displays the CG image on the VR device. Specifically, the VR device may periodically send an uplink control packet that includes interaction device signals such as a head rotation signal/handle signal. The cloud server may generate a downlink video frame based on the interaction device signals and a frame rate (for example, 60 frames per second (frames per second, FPS)), and send the downlink video frame to the VR device via the network. In this case, a time period from a moment at which the VR device sends the uplink control packet to a moment at which the corresponding downlink video frame is transmitted to the VR device for display is an MTP latency. Generally, the MTP latency needs to be within 20 milliseconds (ms). If the MTP latency exceeds 20 ms, the displayed image cannot keep up with the head motion of the user, causing dizziness of the user and affecting user experience. Therefore, a network side needs to control the MTP latency to meet a requirement of the CG-type VR service.

To control the MTP latency, a possible manner is provided to control a downlink transmission latency of a video frame, that is, time taken from a moment at which the cloud server sends the video frame to a moment at which the VR device completely displays the video frame. Because a video frame includes a large volume of data, the video frame usually needs to be divided into a plurality of data packets in downlink transmission. However, the data packets are transmitted via the network one by one in a serial processing manner, and there is a sequence of transmitting the data packets of the video frame, that is, there is a lag. Therefore, a lag in transmission of the video frame needs to be considered for controlling the downlink transmission latency of the video frame. In an existing QoS monitoring mechanism, detection is performed by using a data packet as a granularity, and consequently the lag in transmission of the plurality of data packets cannot be sensed in the QoS monitoring mechanism. If the QoS monitoring mechanism is used to control the downlink transmission latency of the video frame, because the transmission lag cannot be sensed in the QoS monitoring mechanism, the MTP latency is uncontrollable, affecting user experience.

The following describes technical solutions of this application with reference to accompanying drawings.

The technical solutions in embodiments of this application can be applied to various communication systems, for example, a wireless network (Wi-Fi) system, a vehicle-to-everything (vehicle-to-everything, V2X) communication system, a device-to-device (device-to-device, D2D) communication system, an internet-of-vehicles communication system, a 4th generation (4th generation, 4G) mobile communication system like a long term evolution (long term evolution, LTE) system or a worldwide interoperability for microwave access (worldwide interoperability for microwave access, WiMAX) communication system, 5th generation (5th generation, 5G) like a new radio (new radio, NR) system, and a future communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Moreover, in embodiments of this application, a term "example", "for example", or the like is used to represent giving an example, an illustration, or a description. Any embodiment or design scheme described as an "example" in this application should not be construed as being preferred or having more advantages over other embodiments or design schemes. Exactly, the term "for example" is used to present a concept in a specific manner.

In embodiments of this application, "information (information)", "signal (signal)", "message (message)", "channel (channel)", and "signaling (signaling)" may sometimes be used interchangeably. It should be noted that meanings expressed by the terms are matchable when differences between the terms are not emphasized. The terms "of (of)", "corresponding or relevant (corresponding, relevant)", and "corresponding (corresponding)" may sometimes be used interchangeably. It should be noted that meanings expressed by the terms are matchable when differences between the terms are not emphasized. In addition, "/" mentioned in this application may indicate an "or" relationship. Moreover, sending to A or the like mentioned in embodiments of this application is a sending behavior in which A is used as a destination address, and may be directly or indirectly sending to A. Likewise, receiving from A or the like mentioned in embodiments of this application is a receiving behavior in which A is used as a source address, and may be directly or indirectly receiving from A.

The network architectures and the service scenarios that are described in embodiments of this application are intended to describe the technical solutions of embodiments of this application more clearly, and do not constitute any limitation on the technical solutions provided in embodiments of this application. A person of ordinary skill in the art can know that as the network architectures evolve and new service scenarios emerge, the technical solutions provided in embodiments of this application are also applicable to similar technical problems.

For ease of understanding embodiments of this application, a communication system shown in FIG. 6 is first used as an example to detail communication systems to which embodiments of this application are applicable. For example, FIG. 6 is a diagram of an architecture of a communication system to which a communication method is applicable according to an embodiment of this application.

As shown in FIG. 6, the communication system is applicable to the foregoing 5GS, and includes a network device, for example, a user plane network element or an access network device, and a terminal device.

In the communication system, for a downlink transmission frame, for example, a video frame or an audio frame that includes a data packet set, the network device may determine a moment at which the network device receives a 1^{st} data packet in the data packet set, and the terminal device may feed back a moment at which the terminal device receives a last data packet in the data packet set, so that time during which the data packet set stays on the network device is considered. Alternatively, the network device may determine a moment at which the network device receives a 1^{st} data packet in the data packet set and a moment at which the network device sends a last data packet in the data packet set, so that time during which the data packet set stays on the network device is considered. In this way, transmission duration of the data packet set or transmission duration of the frame can be accurately determined, so that downlink transmission can be controlled based on the transmission duration, and the transmission duration of the frame is controllable. This ensures an MTP latency.

The following specifically describes an interaction procedure between network elements/devices in the foregoing communication system by using method embodiments.

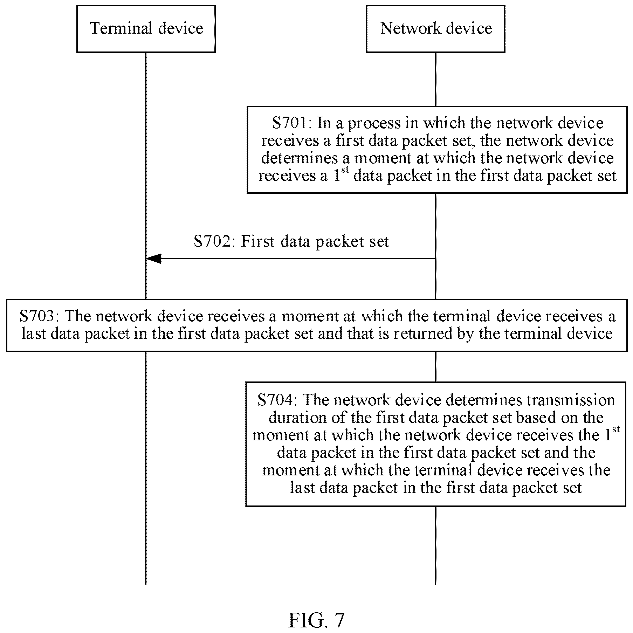

FIG. 7 is a schematic flowchart 1 of a communication method according to an embodiment of this application. The communication method is applicable to the foregoing communication system, and relates to interaction between a network device and a terminal. In the communication method, the network device may determine transmission duration of a data packet set based on a moment at which the network device receives a 1^{st} data packet in the data packet set and a moment at which the terminal device receives a last data packet in the data packet set.

Specifically, as shown in FIG. 7, a procedure for the communication method is as follows.

S701: In a process in which the network device receives a first data packet set, the network device determines a moment at which the network device receives a 1^{st} data packet in the first data packet set.

The network device may be a device, a network element, or an entity configured to implement a user plane function, for example, a user plane network element, and may be specifically a UPF. Alternatively, in a future communication system, the network device may be replaced with any possible device, network element, or entity that can implement functions in this embodiment of this application. This is not limited.

The first data packet set may include a plurality of data packets, and belongs to a data packet set of a first service. In other words, the data packet set of the first service includes the first data packet set. The first service may include at least one of the following: an XR service, a VR service, or any other possible service, to cover existing service scenarios and future service scenarios as much as possible. On this basis, the first data packet set may be specifically one of at least one data packet set included in a first frame. The first frame may be a video frame, an audio frame, or any other possible type of frame of the first service. This is not limited. For example, according to a sequence of transmitting the data packets, the first data packet set may be a 1^{st} data packet set, a last data packet set, or any data packet set in the at least one data packet set. This is not limited.

It can be understood that the first data packet set may be replaced with a plurality of data packets, a first frame, or the like.

In this embodiment of this application, the network device may receive the first data packet set from another network element. For example, an application function is an application function outside an operator network to which the network device belongs, and the network device may receive the first data packet set from the external application function via a capability exposure network element (for example, a NEF). For another example, an application function and the network device belong to a same operator network, and the network device may directly receive the first data packet set from the application function. In addition, the receiving, by the network device, the first data packet set from the application function can also be understood as receiving, by the network device, the first data packet set from a data network (for example, a DN).

In a possible manner, the network device may determine, based on first configuration information, the moment at which the network device receives the 1^{st} data packet in the first data packet set.

The first configuration information may indicate whether the network device needs to determine transmission duration of a data packet set, and the data packet set may be a data packet set including the first data packet set. In other words, whether the network device needs to record the transmission duration of the data packet set may be indicated by the configuration information, to implement on-demand recording and avoid recording redundancy. For example, the first configuration information may include a 1-bit indication information element, which is denoted as an indication information element #1, to indicate, based on whether the indication information element #1 is valid, whether the network device needs to determine the transmission duration of the data packet set. In this case, a value of the indication information element #1 being 1 indicates that the indication information element #1 is valid, and is used to indicate that the network device needs to determine the transmission duration of the data packet set. In contrast, a value of the indication information element #1 being 0 indicates that the indication information element #1 is invalid, and is used to indicate that the network device does not need to determine the transmission duration of the data packet set. For another example, the first configuration information may indicate, based on whether the indication information element #1 is carried, whether the network device needs to determine the transmission duration of the data packet set. In this case, if the first configuration information carries the indication information element #1, it indicates that the network device needs to determine the transmission duration of the data packet set. In contrast, if the first configuration information does not carry the indication information element #1, it indicates that the network device does not need to determine the transmission duration of the data packet set.

Optionally, the first configuration information may further indicate whether the network device needs to determine transmission duration of the data packet set of the first service. For example, the first configuration information may further include information identifying the first service, for example, a 5-tuple of a data packet of the first service, or any other information that may identify the first service. This is not limited. In this way, the information identifying the first service and the indication information element #1 may jointly indicate whether the network device needs to determine the transmission duration of the data packet set of the first service, so that the transmission duration of the data packet set is more flexibly determined by using a service as a granularity.

It can be understood that, when the first configuration information carries information identifying a service (for example, the first service), the information identifying the service may also be considered to represent an application scope of the first configuration information. For example, if the first configuration information includes the information identifying the first service, but does not include information identifying a second service, it indicates that the first configuration information is applicable only to the first service, and is not applicable to the second service. In this case, the network device does not need to determine transmission duration of a data packet set of the second service, and performs processing in an existing manner. If the first configuration information does not include any information identifying a service, it indicates that the first configuration information is applicable to all services corresponding to the network device. In other words, for a data packet set of any service received by the network device, the network device may determine transmission duration of the data packet set.

Optionally, the first configuration information may further indicate at least one of the following: a moment at which the transmission duration of the data packet set starts to be determined, a moment at which the transmission duration of the data packet set stops being determined, or an interval between determining the transmission duration of the data packet set every two times. In other words, the time at which the network device starts to determine the transmission duration of the data packet set and the time at which the network device stops determining the transmission duration of the data packet set may be indicated by the configuration information, to implement on-demand starting or stopping and avoid performing a redundant procedure. For example, the first configuration information may include an information element of a start time, to indicate the moment at which the transmission duration of the data packet set starts to be determined; and/or the first configuration information may include an information element of a receiving time, to indicate the moment at which the transmission duration of the data packet set stops being determined; and/or the first configuration information may include an information element of a cycle time, to indicate the interval between determining the transmission duration of the data packet set every two times.

It can be understood that, if the first configuration information indicates only the moment at which the transmission duration of the data packet set starts to be determined, the moment at which the transmission duration of the data packet set stops being determined may be determined by the network device or predefined in a protocol. For example, the following content is defined: Determining of the transmission duration ends 5 ms after the start. If the first configuration information indicates only the moment at which the transmission duration of the data packet set stops being determined, the moment at which the transmission duration of the data packet set starts to be determined may be determined by the network device or predefined in a protocol. For example, the following content is defined: Determining of the transmission duration starts 5 ms before the end. If the first configuration information does not indicate the interval between determining the transmission duration of the data packet set every two times, whether the transmission duration of the data packet set needs to be periodically determined and duration of an interval between every two cycles may be determined by the network device, or may be predefined in a protocol. In this case, if the network device determines that the transmission duration of the data packet set does not need to be periodically determined, the transmission duration may be determined only once, that is, a single process from start to end. Certainly, the first configuration information may alternatively not indicate at least one of the foregoing items, and the at least one of the foregoing items may be determined by the network device or predefined in a protocol.

The first configuration information may be information that is preconfigured locally on the network device before S701. Alternatively, the first configuration information may be information received by the network device from another network element in advance before S701. In other words, the network device may receive the first configuration information. For example, when the network device is a user plane network element, the user plane network element may receive an N4 message from a session management network element. In this case, the first configuration information may be carried in the N4 message corresponding to the user plane network element. For example, a PDR and/or a QER in the N4 message may carry the first configuration information, that is, the existing message is reused, to reduce implementation difficulty. For a specific implementation principle, refer to related descriptions in the following "second possible design scheme". Details are not described herein. In addition, for specific implementation principles of the PDR and the QER, refer to related descriptions in the foregoing "2. QoS". Details are not described herein again. Alternatively, the first configuration information may be carried in a newly defined message, to implement decoupling from the existing message and more flexible information transmission.

If the first configuration information indicates that the network device needs to determine the transmission duration of the data packet set, when the network device receives the 1^{st} data packet in the first data packet set, the network device may determine (or record) the moment at which the network device receives the 1^{st} data packet in the first data packet set. For example, when the network device receives a data packet, the network device may obtain information that identifies a service and that is encapsulated in a header of the data packet, and an identifier of a data packet set (for example, a sequence number of a frame to which the data packet set belongs), to determine that the data packet is a data packet in the first data packet set of the first service. In this case, because the network device has not received data packets in the first data packet set other than the data packet, the network device may determine, based on the first configuration information, that the data packet is the data packet that is first received in the first data packet set, to record a moment at which the network device receives the data packet, that is, the moment at which the network device receives the 1^{st} data packet in the first data packet set of the first service.

It can be understood that, if the first configuration information further indicates at least one of the foregoing items, the network device may further determine, within time indicated by the at least one of the foregoing items, the moment at which the network device receives the 1^{st} data packet in the first data packet set of the first service. Certainly, if the first configuration information indicates that the network device does not need to determine the transmission duration of the data packet set, when the network device receives the 1^{st} data packet in the first data packet set, the network device may perform processing in an existing manner.

In another possible manner, the network device may alternatively determine, by default, the moment at which the network device receives the 1^{st} data packet in the first data packet set. In other words, a behavior that the network device needs to determine the moment at which the network device receives the 1^{st} data packet in the data packet set may be agreed on in advance, for example, predefined in a protocol. In this way, when the network device receives the 1^{st} data packet in the first data packet set, the network device may determine (or record), by default according to the behavior defined in a protocol, the moment at which the network device receives the 1^{st} data packet in the first data packet set of the first service. For example, when the network device receives a data packet, the network device may obtain information that identifies a service and that is encapsulated in a header of the data packet, and an identifier of a data packet set, to determine that the data packet is a data packet in the first data packet set of the first service. In this case, because the network device has not received data packets in the first data packet set other than the data packet, the network device may determine, by default, that the data packet is the data packet that is first received in the first data packet set, to record, by default, a moment at which the network device receives the data packet.

S702: The network device sends the first data packet set to the terminal device.

The network device may map the first data packet set to a QoS flow corresponding to the first service, and then send the first data packet set to the terminal device by using the QoS flow. In addition, for a specific implementation principle of the QoS flow, refer to related descriptions in the foregoing "2. QoS" and "3. Mapping mechanism". Details are not described herein again.

S703: The network device receives a moment at which the terminal device receives a last data packet in the first data packet set and that is returned by the terminal device.

In a possible manner, the terminal device may return, to the network device based on third configuration information, the moment at which the terminal device receives the last data packet in the first data packet set.

The third configuration information may indicate the terminal device to perform feedback in the manner in embodiments of this application, for example, feed back only the moment at which the terminal device receives the last data packet in the data packet set, to greatly reduce feedback overheads, and improve communication efficiency. Alternatively, the third configuration information may indicate the terminal device to perform feedback in an existing manner, for example, feed back a moment at which the terminal device receives each data packet. For example, the third configuration information may include a 1-bit indication information element, which is denoted as an indication information element #2, to indicate, based on whether the indication information element #2 is valid, which feedback manner is used by the terminal device. For example, a value of the indication information element #2 being 1 indicates that the indication information element #2 is valid, and is used to indicate the terminal device to feed back only the moment at which the terminal device receives the last data packet in the data packet set. In contrast, a value of the indication information element #2 being 0 indicates that the indication information element #2 is invalid, and is used to indicate the terminal device to feed back the moment at which the terminal device receives each data packet. For another example, the third configuration information may indicate, based on whether the indication information element #2 is carried, which feedback manner is used by the terminal device. For example, if the third configuration information carries the indication information element #2, the terminal device is indicated to feed back only the moment at which the terminal device receives the last data packet in the data packet set. In contrast, if the third configuration information does not carry the indication information element #2, the terminal device is indicated to feed back the moment at which the terminal device receives each data packet.

Optionally, the third configuration information may further indicate the terminal device to feed back only a moment at which the terminal device receives a last data packet in the data packet set of the first service. Alternatively, the third configuration information may indicate the terminal device to feed back a moment at which the terminal device receives each data packet of the first service. For example, the third configuration information may further include the information identifying the first service. In this way, the information identifying the first service and the indication information element #2 may jointly indicate the terminal device to feed back only the moment at which the terminal device receives the last data packet in the data packet set of the first service, or to feed back the moment at which the terminal device receives each data packet of the first service, so that feedback is more flexibly performed by using a service as a granularity.

It can be understood that, when the third configuration information carries information identifying a service, the information identifying the service may also be considered to represent an application scope of the third configuration information. For example, if the third configuration information includes the information identifying the first service, but does not include the information identifying the second service, it indicates that the third configuration information is applicable only to the first service, and is not applicable to the second service. In this case, for the second service, the terminal device may perform processing in an existing manner, for example, feed back a moment at which the terminal device receives each data packet of the second service. If the third configuration information does not include any information identifying a service, it indicates that the third configuration information is applicable to all services corresponding to the network device. In other words, for a data packet set of any service received by the terminal device, the terminal device may feed back only a moment at which the terminal device receives a last data packet in the data packet set.

The third configuration information may be information that is preconfigured locally on the terminal device before S703 or information received by the terminal device from another network element in advance. In other words, the terminal device may receive the third configuration information. For example, the terminal device may receive the third configuration information from the session management network element. In this case, the third configuration information may be carried in an N1 message. For example, a QoS rule in the N1 message may carry the third configuration information, that is, the existing message is reused, to reduce implementation difficulty. For a specific implementation principle, refer to related descriptions in the following "second possible design scheme". Details are not described herein. In addition, for a specific implementation principle of the QoS rule, refer to related descriptions in the foregoing "2. QoS". Details are not described herein again. Alternatively, the third configuration information may be carried in a newly defined message, to implement decoupling from the existing message and more flexible information transmission.

If the third configuration information indicates that the terminal device needs to feed back only the moment at which the terminal device receives the last data packet in the data packet set, in a process in which the terminal device receives the first data packet set from the network device, the terminal device may send, to the network device based on the third configuration information, the moment at which the terminal device receives the last data packet in the first data packet set. For example, when the terminal device receives a data packet, the terminal device may obtain information that indicates a service and that is encapsulated in a header of the data packet, and an identifier of a data packet set, to determine that the data packet is a data packet in the first data packet set of the first service. In this case, if determining that the terminal device has not received data packets in the first data packet set other than the data packet within a timeout period after the data packet is received, the terminal device may determine that the data packet is the data packet that is last received in the first data packet set, and feed back, to the network device, a moment at which the terminal device receives the data packet, that is, the moment at which the terminal device receives the last data packet in the first data packet set of the first service. For example, information fed back by the terminal device to the network device may include the information identifying the first service, the identifier of the data packet set, and information about the moment at which the terminal device receives the last data packet in the first data packet set of the first service. In addition, for the data packets in the first data packet set other than the last data packet, the terminal device may not record moments of receiving these data packets, or may record the moments of receiving these data packets but does not perform feedback.

In another possible manner, the terminal device may feed back, by default to the network device, the moment at which the terminal device receives the last data packet in the first data packet set. In other words, a behavior that the terminal device feeds back, to the network device, only the moment at which the terminal device receives the last data packet in the first data packet set may be agreed on in advance, for example, predefined in a protocol. In this way, when the terminal device receives the last data packet in the first data packet set, the terminal device may feed back, by default to the network device according to the behavior defined in a protocol, the moment at which the terminal device receives the last data packet in the first data packet set. For example, when the terminal device receives a data packet, the terminal device may obtain information that indicates a service and that is encapsulated in a header of the data packet, and an identifier of a data packet set, to determine that the data packet is a data packet in the first data packet set of the first service. In this case, if determining that the terminal device has not received data packets in the first data packet set other than the data packet within a timeout period after the data packet is received, the terminal device may feed back, by default to the network device, a moment at which the terminal device receives the data packet, that is, the moment at which the terminal device receives the last data packet in the first data packet set of the first service.

S704: The network device determines transmission duration of the first data packet set based on the moment at which the network device receives the 1^{st} data packet in the first data packet set and the moment at which the terminal device receives the last data packet in the first data packet set.

After the network device receives the information fed back by the terminal device, for example, the information identifying the first service, the identifier of the data packet set, and the information about the moment at which the terminal device receives the last data packet in the first data packet set of the first service, the network device may determine, based on the information identifying the first service and the identifier of the data packet set, that the information about the moment represents the moment at which the terminal device receives the last data packet in the first data packet set of the first service. In this case, the network device may determine, according to a preset calculation rule, a time difference between the moment at which the network device receives the 1^{st} data packet in the first data packet set and the moment at which the terminal device receives the last data packet in the first data packet set. The time difference is the transmission duration of the first data packet set.

It can be understood that the calculation rule means that the network device needs to determine the time difference between the moment at which the network device receives the 1^{st} data packet in the data packet set and the moment at which the terminal device receives the last data packet in the data packet set. The calculation rule may be preconfigured locally on the network device, may be predefined locally on the network device by using a protocol, or may be indicated by the first configuration information. This is not specifically limited.

In summary, a frame usually includes a plurality of data packets, that is, a data packet set. There is a lag in transmission of a data packet set, that is, a period of time is needed for receiving a 1^{st} data packet in the data packet set to sending a last data packet by the network device. Therefore, the network device may determine the moment at which the network device receives the 1^{st} data packet in the data packet set and a moment at which the terminal device receives the last data packet in the data packet set. In other words, time during which the data packet set stays on the network device is considered, to accurately determine transmission duration of the data packet set or transmission duration of the frame, so that an MTP latency is ensured.

Optionally, in a first possible design scheme, with reference to the method shown in FIG. 7, the method may further include: When the transmission duration of the first data packet set is greater than a transmission duration threshold, the network device sends the transmission duration of the first data packet set.

The transmission duration threshold may be transmission duration allowed by the data packet set of the first service, or transmission duration that can meet a requirement of the first service. If the transmission duration of the first data packet set is greater than the transmission duration threshold, it indicates that transmission of the first data packet set times out, and the requirement of the first service cannot be met. Therefore, the network device may report the transmission duration, for example, send the transmission duration of the first data packet set to the application function that provides the first service, so that the application function can perform dynamic adjustment, for example, reduce a bit rate or resolution, to ensure user experience as much as possible.

In a possible manner, the network device may send the transmission duration of the first data packet set based on second configuration information.

The second configuration information may indicate at least one of the following: the transmission duration threshold or a reporting rule. The reporting rule is used to indicate that transmission duration of a data packet set needs to be reported (for example, reported to the application function) when the transmission duration of the data packet set is greater than the transmission duration threshold. It can be understood that if the second configuration information indicates only the transmission duration threshold, the reporting rule may be preconfigured locally on the network device, or the reporting rule may be implicitly indicated by the transmission duration threshold. In other words, if the second configuration information indicates the transmission duration threshold, it indicates that the transmission duration of the data packet set needs to be reported when the transmission duration of the data packet set is greater than the transmission duration threshold. Alternatively, if the second configuration information indicates only the reporting rule, the transmission duration threshold may be preconfigured locally on the network device.

The second configuration information may be information that is preconfigured locally on the network device. Alternatively, the second configuration information may be information received by the network device from another network element in advance. In other words, the network device may receive the second configuration information. For example, the network device may receive the second configuration information from the session management network element. In this case, the second configuration information may be carried in the N4 message. For example, the QER and/or the PDR in the N4 message may carry the second configuration information, that is, the existing message is reused, to reduce implementation difficulty. For a specific implementation principle, refer to related descriptions in the following "second possible design scheme". Details are not described herein. In addition, for specific implementation principles of the QER and/or the PDR, refer to related descriptions in the foregoing "2. QoS". Details are not described herein again. Alternatively, the second configuration information may be carried in a newly defined message, to implement decoupling from the existing message and more flexible information transmission.

On this basis, if the network device determines, based on the transmission duration threshold, that the transmission duration of the first data packet set is greater than the transmission duration threshold, the network device may send the transmission duration of the first data packet set to the application function based on the reporting rule.

In another possible manner, the network device may alternatively send the transmission duration of the first data packet set by default. In other words, the transmission duration threshold and the reporting rule may be preconfigured locally on the network device, or may be predefined locally on the network device by using a protocol. In this way, if the network device determines, based on the transmission duration threshold, that the transmission duration of the first data packet set is greater than the transmission duration threshold, the network device may send the transmission duration of the first data packet set to the application function by default based on the reporting rule.

Optionally, in the second possible design scheme, with reference to the method shown in FIG. 7, the method may further include the following steps.

Step a: A policy control network element receives service requirement information from the application function.

The service requirement information may include at least one of the following: information indicating that transmission duration of a data packet set needs to be determined, a transmission duration threshold, or a reporting rule. It can be learned from the foregoing related description that the transmission duration of the data packet set is a time period from a moment at which the user plane network element receives a 1^{st} data packet in the data packet set to a moment at which the terminal device receives a last data packet in the data packet set.

Optionally, the service requirement information may specifically include information indicating that the transmission duration of the data packet set of the first service needs to be determined. For example, the service requirement information may further include the information identifying the first service. In this way, the information identifying the first service and the information indicating that the transmission duration of the data packet set needs to be determined may be combined as the information indicating that the transmission duration of the data packet set of the first service needs to be determined, that is, indicate that the transmission duration of the data packet set of the first service needs to be determined.

In this embodiment of this application, the policy control network element may receive the service requirement information from the application function on any possible occasion. This is not specifically limited.

Step b: The policy control network element sends a PCC rule to the session management network element based on the service requirement information. The session management network element receives the PCC rule from the policy control network element.

The policy control network element may determine, based on the service requirement information, the PCC rule corresponding to the service requirement information. For example, the policy control network element may encapsulate information in the service requirement information, such as the information identifying the first service, the information indicating that the transmission duration of the data packet set needs to be determined, the transmission duration threshold, or the reporting rule, into a new PCC rule or an existing PCC rule, to obtain the PCC rule corresponding to the service requirement information. Then, the policy control network element may send the PCC rule to the session management network element by using an Nx interface or any possible interface.

Step c: The session management network element sends the first configuration information to the user plane network element based on the PCC rule.

The session management network element may determine, based on the PCC rule, a QER and/or a PDR corresponding to the PCC rule, where the QER and/or the PDR may include the first configuration information.

Specifically, the session management network element may generate the first configuration information and/or second configuration information based on the PCC rule.

For example, the session management network element may determine the indication information element #1 based on the information that is in the PCC rule and that indicates that the transmission duration of the data packet set needs to be determined. For a specific implementation, refer to related descriptions in S701. Details are not described herein again. Optionally, the session management network element may further determine, based on the information that is in the PCC rule and that indicates that the transmission duration of the data packet set needs to be determined, at least one of the foregoing items, for example, the moment at which the transmission duration of the data packet set starts to be determined, the moment at which the transmission duration of the data packet set stops being determined, or the interval between determining the transmission duration of the data packet set every two times. For a specific implementation, refer to related descriptions in S701. Details are not described herein again. Optionally, the session management network element may determine, based on the PCC rule, the information identifying the first service. In this way, the session management network element may encapsulate these pieces of determined information as a whole, to obtain the first configuration information.

For another example, the session management network element may determine information such as the transmission duration threshold and/or the reporting rule based on the PCC rule. In this way, the session management network element may encapsulate these pieces of determined information as a whole, to obtain the second configuration information.

In this way, the session management network element may encapsulate the first configuration information and/or the second configuration information into a new QER and/or PDR, or an existing QER and/or PDR, and send the QER and/or the PDR to the user plane network element by using the N4 message. Correspondingly, the user plane network element receives and configures the QER and/or the PDR, and performs a related function based on the QER and/or the PDR.

Step d: The session management network element sends the third configuration information to the terminal device based on the PCC rule.

The session management network element may determine, based on the PCC rule, a QoS rule corresponding to the PCC rule. The QoS rule may include the third configuration information.

Specifically, the session management network element may generate the third configuration information based on the PCC rule. For example, the session management network element may determine the indication information element #2 based on the information that is in the PCC rule and that indicates that the transmission duration of the data packet set needs to be determined. For a specific implementation, refer to related descriptions in S703. Details are not described herein again. Optionally, the session management network element may determine, based on the PCC rule, the information identifying the first service. In this way, the session management network element may encapsulate these pieces of determined information as a whole, to obtain the third configuration information. Then, the session management network element may further encapsulate the third configuration information into a new QoS rule or an existing QoS rule, and send the QoS rule to the terminal device by using the N1 message. Correspondingly, the terminal device receives and configures the QoS rule, and performs a related function based on the QoS rule.

It can be understood that an execution sequence of the foregoing steps is not limited in embodiments of this application, provided that the execution sequence of these steps can meet functions in embodiments of this application.

It can also be understood that in FIG. 7, an example in which the network device is the user plane network element is used, but this is not limited. The user plane network element may be replaced with any possible network element. For example, when an access network device can sense a service, for example, when the access network device can determine which data packet sets are data packet sets of the first service and which data packet sets are data packet sets of the second service, the user plane network element may be replaced with the access network device, to implement the functions of the method by using the access network device. For example, the access network device may determine the moment at which the access network device receives the 1^{st} data packet in the first data packet set and the moment at which the terminal device receives the last data packet in the first data packet set, and a transmission latency of N3 between the access network device and the user plane network element is preconfigured. In this case, the access network device may determine the transmission duration of the first data packet set based on duration between the moment at which the access network device receives the 1^{st} data packet in the first data packet set and the moment at which the terminal device receives the last data packet in the first data packet set, and the transmission latency of N3.

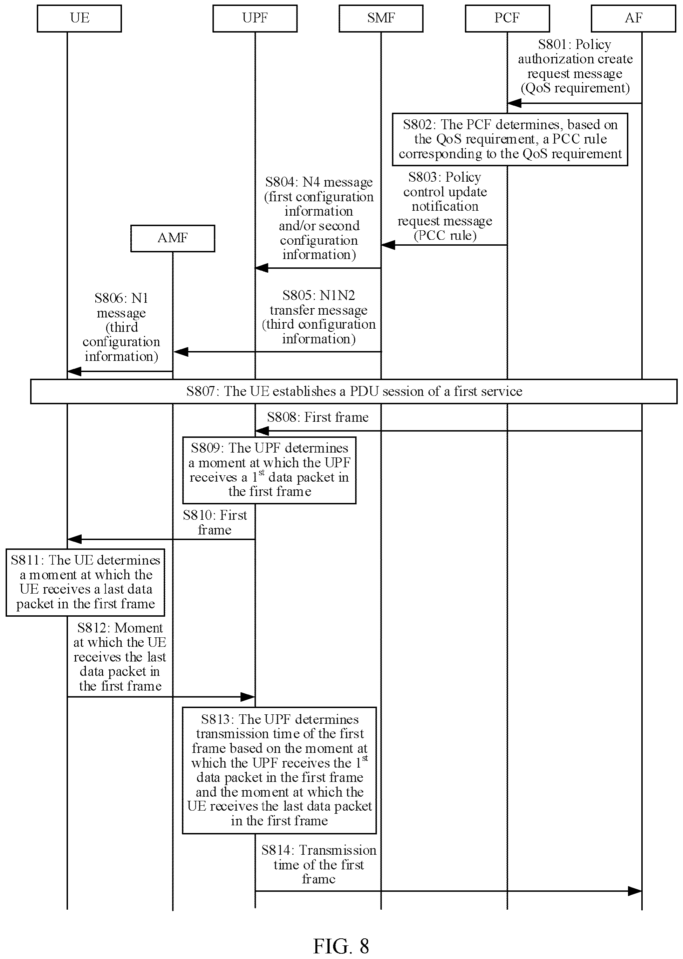

The foregoing details an overall procedure for the communication method provided in this embodiment of this application with reference to FIG. 7. The following specifically describes a procedure for the communication method in a specific scenario with reference to FIG. 8.

FIG. 8 is a schematic flowchart 2 of a communication method according to an embodiment of this application. The communication method is applicable to the foregoing communication system, and mainly relates to interaction between a UE, a UPF, an AMF, an SMF, a PCF, and an AF.

Specifically, as shown in FIG. 8, a procedure for the communication method is as follows.

S801: The AF sends a policy authorization create request (Npcf_PolicyAuthorization_Create Request) message to the PCF. The PCF receives the policy authorization create request from the AF.

The policy authorization create request may carry a QoS requirement (that is, the foregoing service requirement information). The QoS requirement may include at least one of the following: information indicating that transmission duration of a data packet set needs to be determined, a transmission duration threshold, or a reporting rule. For a specific implementation principle, refer to related descriptions in step 2. Details are not described herein again.

It can be understood that the AF may directly send the policy authorization create request to the PCF, or may send the policy authorization create request to the PCF via a NEF. This is not limited. In addition, when the policy authorization create request is sent via the NEF, the NEF needs to perform authentication on the AF, to determine whether the AF is trustworthy. For a specific implementation principle, refer to related descriptions in chapter 6 of TS 29.522. Details are not described herein.

S802: The PCF determines, based on the QoS requirement, a PCC rule corresponding to the QoS requirement.

S803: The PCF sends a policy control update notification request message to the SMF. The SMF receives the policy control update notification request (Npcf_SMPolicyControl_UpdateNotify Request) message from the PCF.

The policy control update notification request carries the PCC rule. For a specific implementation principle of the PCC rule, refer to related descriptions in step b. Details are not described herein again.

S804: The SMF sends an N4 message to the UPF. The UPF receives the N4 message from the SMF.

The N4 message may carry first configuration information and/or second configuration information that are/is determined based on the PCC rule. For a specific implementation principle of the first configuration information, refer to related descriptions in the second possible design scheme. For a specific implementation principle of the second configuration information, refer to related descriptions in the first possible design scheme. Details are not described herein again.

S805: The SMF sends an N1N2 transfer (Namf_Communication_N1N2MessageTransfer) message to the AMF. The AMF receives the N1N2 transfer message from the SMF.

The N1N2 transfer message may carry third configuration information determined based on the PCC rule. For a specific implementation principle of the third configuration information, refer to related descriptions in S703. Details are not described herein again.

S806: The AMF sends an N1 message to the UE. The UE receives the N1 message from the AMF.

The N1 message may carry the third configuration information. In other words, the AMF may encapsulate the received third configuration information into the N1 message, and then send the N1 message to the UE.

S807: The UE establishes a PDU session of a first service.

For a specific implementation principle of establishing the PDU session, refer to related descriptions in TS 23.502. Details are not described herein.

S808: The UPF receives a first frame from the AF.

The first frame may be carried in the established PDU session. In addition, for a specific implementation principle of the first frame, refer to related descriptions in S701. Details are not described herein again.

S809: The UPF determines a moment at which the UPF receives a 1^{st} data packet in the first frame.

For a specific implementation principle of S809, refer to related descriptions in S701. Details are not described herein again.

S810: The UPF sends the first frame to the UE. The UE receives the first frame from the UPF.

For a specific implementation principle of S810, refer to related descriptions in S702. Details are not described herein again.

S811: The UE determines a moment at which the UE receives a last data packet in the first frame.

S812: The UE sends, to the UPF, the moment at which the UE receives the last data packet in the first frame. The UPF receives, from the UE, the moment at which the UE receives the last data packet in the first frame.

For specific implementation principles of S811 and S812, refer to related descriptions in S703. Details are not described herein again.

S813: The UPF determines transmission time of the first frame based on the moment at which the UPF receives the 1^{st} data packet in the first frame and the moment at which the UE receives the last data packet in the first frame.

For a specific implementation principle of S813, refer to related descriptions in S704. Details are not described herein again.

S814: The UPF sends the transmission time of the first frame to the AF. The AF receives the transmission time of the first frame from the UPF.

For a specific implementation principle of S814, refer to related descriptions in the first possible design scheme. Details are not described herein again.

It can be understood that one data packet set included in the first frame, for example, the first data packet set is as an example in FIG. 8. Actually, the first frame may alternatively include a plurality of data packet sets. In this case, transmission duration of each data packet set may be determined in the foregoing manner, and then the transmission duration of the first frame is determined, to ensure that transmission duration of each frame is controllable.

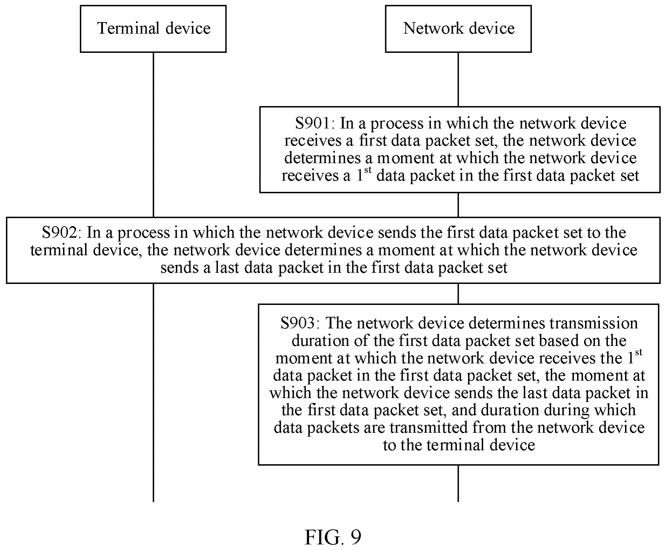

FIG. 9 is a schematic flowchart 3 of a communication method according to an embodiment of this application. The communication method is applicable to the foregoing communication system, and relates to interaction between a network device and a terminal. In the communication method, the network device may determine transmission duration of a data packet set based on a moment at which the network device receives a 1^{st} data packet in the data packet set, a moment at which the network device sends a last data packet in the data packet set, and duration during which data packets are transmitted from the network device to the terminal device.

Specifically, as shown in FIG. 9, a procedure for the communication method is as follows.

S901: In a process in which the network device receives a first data packet set, the network device determines a moment at which the network device receives a 1^{st} data packet in the first data packet set.

For a specific implementation principle of S901, refer to related descriptions in S701. Details are not described herein again.

S902: In a process in which the network device sends the first data packet set to the terminal device, the network device determines a moment at which the network device sends a last data packet in the first data packet set.

In a possible manner, the network device may determine, based on first configuration information, the moment at which the network device sends the last data packet in the first data packet set. For a specific implementation principle of the first configuration information, refer to related descriptions in S701. Details are not described herein again. For example, when the network device sends a data packet, the network device may obtain information that identifies a service and that is encapsulated in a header of the data packet, and an identifier of a data packet set, to determine that the data packet is a data packet in the first data packet set of a first service. If determining that the network device has not sent data packets in the first data packet set other than the data packet within a timeout period after the data packet is sent, the network device may determine that the data packet is the data packet that is last sent in the first data packet set, and record, based on the first configuration information, a moment at which the network device sends the data packet, that is, the moment at which the network device sends the last data packet in the first data packet set.

In another possible manner, the network device may alternatively determine, by default, the moment at which the network device sends the last data packet in the first data packet set. In other words, a behavior that the network device needs to determine the moment at which the network device sends the last data packet in the data packet set may be agreed on in advance, for example, predefined in a protocol. In this way, when the network device sends the last data packet in the first data packet set, the network device may determine (or record), by default according to the behavior defined in a protocol, the moment at which the network device sends the last data packet in the first data packet set of a first service.

S903: The network device determines transmission duration of the first data packet set based on the moment at which the network device receives the 1^{st} data packet in the first data packet set, the moment at which the network device sends the last data packet in the first data packet set, and duration during which data packets are transmitted from the network device to the terminal device.

The network device may determine, according to a preset calculation rule, a time difference between the moment at which the network device receives the 1^{st} data packet in the first data packet set and the moment at which the network device sends the last data packet in the first data packet set. The time difference is duration during which the first data packet set stays on the network device. The network device may further add, according to the preset calculation rule, the duration during which the first data packet set stays on the network device and the duration during which the data packets are transmitted from the network device to the terminal device, to obtain the transmission duration of the first data packet set. The duration during which the data packets are transmitted from the network device to the terminal device may be determined by the network device by using a QoS monitoring mechanism. For a specific implementation principle, refer to related descriptions in the foregoing "4. QoS monitoring mechanism". Details are not described herein again.

It can be understood that the calculation rule means that the network device needs to determine a time difference between the moment at which the network device receives the 1^{st} data packet in the data packet set and a moment at which the terminal device receives the last data packet in the data packet set, and the network device further needs to add the time difference to the duration during which the data packets are transmitted from the network device to the terminal device. The calculation rule may be preconfigured locally on the network device, may be predefined locally on the network device by using a protocol, or may be indicated by the first configuration information. This is not specifically limited.

In summary, a frame usually includes a plurality of data packets, that is, a data packet set. There is a lag in transmission of a data packet set, that is, a period of time is needed for receiving a 1^{st} data packet in the data packet set to sending a last data packet by the network device. Therefore, the network device may determine the moment at which the network device receives the 1^{st} data packet in the first data packet set and the moment at which the network device sends the last data packet in the first data packet set. In other words, the time during which the data packet set stays on the network device is considered, to accurately determine transmission duration of the data packet set or transmission duration of the frame, so that an MTP latency is ensured.

Optionally, in a third possible design scheme, with reference to the method shown in FIG. 9, the method may further include: When the transmission duration of the first data packet set is greater than a transmission duration threshold, the network device sends the transmission duration of the first data packet set. For a specific implementation principle, refer to related descriptions in the first possible design scheme. Details are not described herein again.

Optionally, in a fourth possible design scheme, with reference to S901 to S903, S904 is performed as follows:
S904: When the transmission duration of the first data packet set is greater than the transmission duration threshold, the network device sends the transmission duration of the first data packet set.

For a specific implementation principle of S903, refer to related descriptions in S704. Details are not described herein again.

Optionally, in the fourth possible design scheme, with reference to the method shown in FIG. 8, the method may further include the following steps.

Step A: A policy control network element receives service requirement information from an application function.

Step B: The policy control network element sends a PCC rule to a session management network element based on the service requirement information. The session management network element receives the PCC rule from the policy control network element.

Step C: The session management network element sends the first configuration information to a user plane network element based on the PCC rule.

For specific implementation principles of step A to step C, refer to related descriptions in step a to step c. Details are not described herein again.

It can also be understood that in FIG. 8, an example in which the network device is the user plane network element is used, but this is not limited. The user plane network element may be replaced with any possible network element. For example, when an access network device can sense a service, for example, when the access network device can determine which data packet sets are data packet sets of the first service and which data packet sets are data packet sets of a second service, the user plane network element may be replaced with the access network device, to implement the functions of the method by using the access network device. For example, the access network device may determine the moment at which the access network device receives the 1^{st} data packet in the first data packet set and the moment at which the access network device sends the last data packet in the first data packet set, and a transmission latency of N3 between the access network device and the user plane network element is preconfigured. In this case, the access network device may determine the transmission duration of the first data packet set based on duration between the moment at which the access network device receives the 1^{st} data packet in the first data packet set and the moment at which the terminal device receives the last data packet in the first data packet set, the transmission latency of N3, and an air interface transmission latency determined by using the QoS monitoring mechanism.

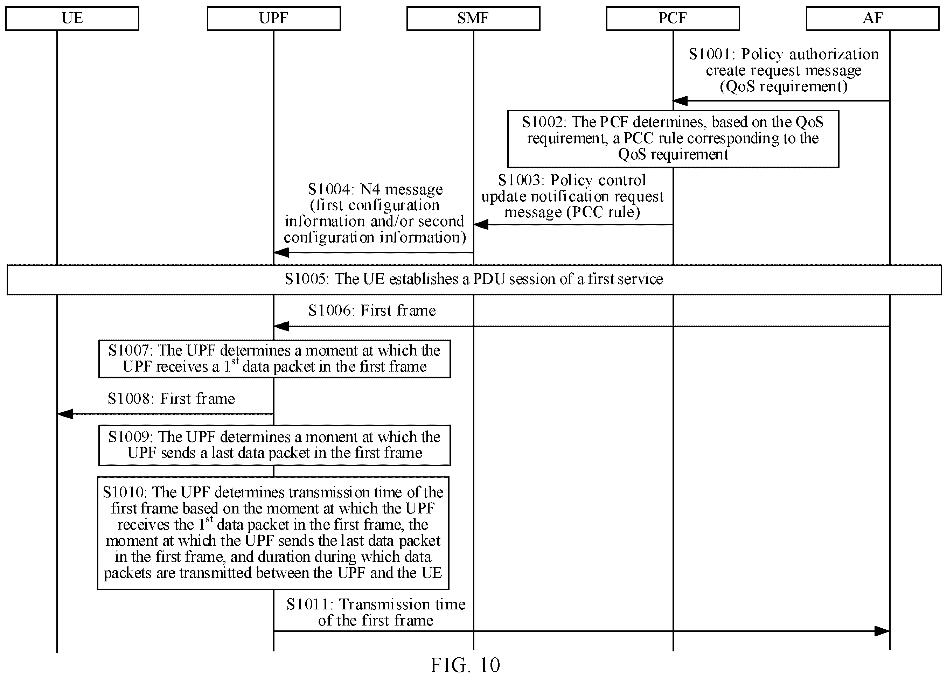

The foregoing details an overall procedure for the communication method provided in this embodiment of this application with reference to FIG. 9. The following specifically describes a procedure for the communication method in a specific scenario with reference to FIG. 10.

FIG. 10 is a schematic flowchart 4 of a communication method according to an embodiment of this application. The communication method is applicable to the foregoing communication system, and mainly relates to interaction between a UE, a UPF, an SMF, a PCF, and an AF.

Specifically, as shown in FIG. 10, a procedure for the communication method is as follows.

S1001: The AF sends a policy authorization create request message to the PCF. The PCF receives the policy authorization create request from the AF.

S1002: The PCF determines, based on a QoS requirement, a PCC rule corresponding to the QoS requirement.

S1003: The PCF sends a policy control update notification request message to the SMF. The SMF receives the policy control update notification request message from the PCF.

S1004: The SMF sends an N4 message to the UPF. The UPF receives the N4 message from the SMF.

For specific implementation principles of S1001 to S1004, refer to related descriptions in S801 to S804. Details are not described herein again.

S1005: The UE establishes a PDU session of a first service.

For a specific implementation principle of establishing the PDU session, refer to related descriptions in TS 23.502. Details are not described herein.

S1006: The UPF receives a first frame from the AF.

The first frame may be carried in the established PDU session. In addition, for a specific implementation principle of the first frame, refer to related descriptions in S701. Details are not described herein again.

S1007: The UPF determines a moment at which the UPF receives a 1^{st} data packet in the first frame.

For a specific implementation principle of S1007, refer to related descriptions in S701. Details are not described herein again.

S1008: The UPF sends the first frame to the UE. The UE receives the first frame from the UPF.

For a specific implementation principle of S1008, refer to related descriptions in S702. Details are not described herein again.

S1009: The UPF determines a moment at which the UPF sends a last data packet in the first frame.

For a specific implementation principle of S1009, refer to related descriptions in S902. Details are not described herein again.

S1010: The UPF determines transmission time of the first frame based on the moment at which the UPF receives the 1^{st} data packet in the first frame, the moment at which the UPF sends the last data packet in the first frame, and duration during which data packets are transmitted between the UPF and the UE.

For a specific implementation principle of S1010, refer to related descriptions in S903. Details are not described herein again.

S1011: The UPF sends the transmission time of the first frame to the AF. The AF receives the transmission time of the first frame from the UPF.

For a specific implementation principle of S1011, refer to related descriptions in the first possible design scheme. Details are not described herein again.

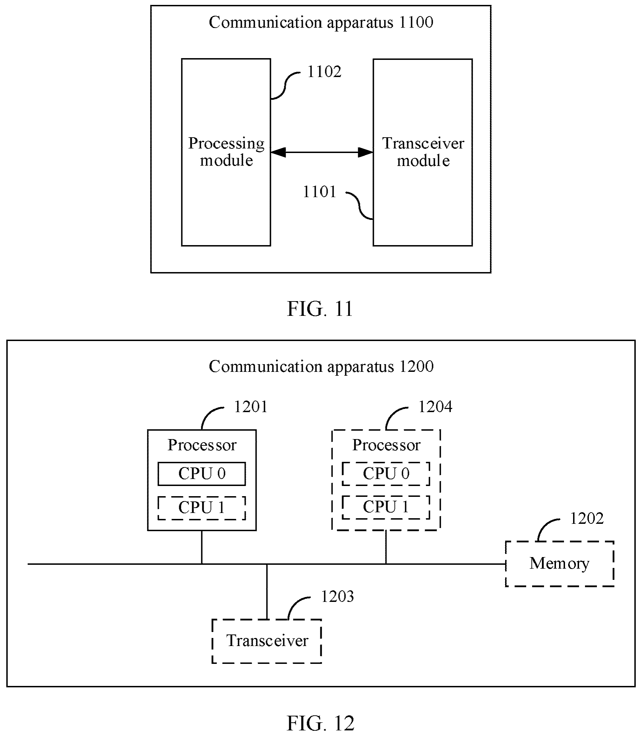

With reference to FIG. 7 to FIG. 10, the foregoing details the communication methods provided in embodiments of this application. With reference to FIG. 11 and FIG. 12, the following details communication apparatuses configured to perform the communication methods provided in embodiments of this application.

FIG. 11 is a diagram 1 of a structure of a communication apparatus according to an embodiment of this application. For example, as shown in FIG. 11, the communication apparatus 1100 includes a transceiver module 1101 and a processing module 1102. For ease of description, FIG. 11 shows only main components of the communication apparatus.

In some embodiments, the communication apparatus 1100 is applicable to the communication system shown in FIG. 6, and performs functions of the user plane network element or the UPF in the methods shown in FIG. 7 and FIG. 8.

The processing module 1102 is configured to: in a process in which the transceiver module 1101 receives a first data packet set, determine a moment at which the communication apparatus 1100 receives a 1^{st} data packet in the first data packet set. The transceiver module 1101 is configured to: send the first data packet set to a terminal device, and receive a moment at which the terminal device receives a last data packet in the first data packet set and that is returned by the terminal device. The processing module 1102 is further configured to determine transmission duration of the first data packet set based on the moment at which the communication apparatus 1100 receives the 1^{st} data packet in the first data packet set and the moment at which the terminal device receives the last data packet in the first data packet set.

In a possible design scheme, the transceiver module 1101 is further configured to receive first configuration information. The first configuration information indicates that the communication apparatus 1100 needs to determine transmission duration of a data packet set, and the data packet set includes the first data packet set.

Optionally, the first configuration information specifically indicates that the communication apparatus 1100 needs to determine transmission duration of a data packet set of a first service, and the data packet set of the first service includes the data packet set of the first service.

Optionally, the first configuration information further indicates at least one of the following: a moment at which the transmission duration of the data packet set starts to be determined, a moment at which the transmission duration of the data packet set stops being determined, or an interval between determining the transmission duration of the data packet set every two times.

Further, the communication apparatus 1100 is a user plane network element, and the first configuration information is carried in an N4 message corresponding to the user plane network element.

In a possible design scheme, the transceiver module 1101 is further configured to: when the transmission duration of the first data packet set is greater than a transmission duration threshold, send the transmission duration of the first data packet set, where the transmission duration threshold is transmission duration allowed by a data packet set of a first service, and the data packet set of the first service includes the data packet set of the first service.

Optionally, the transceiver module 1101 is configured to receive second configuration information, where the second configuration information indicates at least one of the following: the transmission duration threshold or a reporting rule, and the reporting rule is used to indicate that transmission duration of a data packet set needs to be reported when the transmission duration of the data packet set is greater than the transmission duration threshold.

Further, the communication apparatus 1100 is a user plane network element, and the second configuration information is carried in an N4 message corresponding to the user plane network element.

Optionally, the first service includes at least one of the following: an XR service or a VR service.

In a possible design scheme, the first data packet set is one of at least one data packet set included in a first frame.

Optionally, the transceiver module 1101 may include a sending module (not shown in FIG. 11) and a receiving module (not shown in FIG. 11). The sending module is configured to implement a sending function of the communication apparatus 1100, and the receiving module is configured to implement a receiving function of the communication apparatus 1100.

Optionally, the communication apparatus 1100 may further include a storage module (not shown in FIG. 11), and the storage module stores a program or instructions. When the processing module 1102 executes the program or instructions, the communication apparatus 1100 is enabled to perform the functions of the user plane network element or the UPF in the methods shown in FIG. 7 and FIG. 8 in the foregoing methods.

It can be understood that the communication apparatus 1100 may be a network device, for example, a user plane network element or a UPF, may be a chip (system) or another component or part that may be disposed in the network device, or may be an apparatus that includes the network device. This is not limited in this application.

In addition, for technical effects of the communication apparatus 1100, refer to the technical effects of the communication methods shown in FIG. 7 and FIG. 8. Details are not described herein again.

In some other embodiments, the communication apparatus 1100 is applicable to the communication system shown in FIG. 6, and performs functions of the terminal device or the UE in the methods shown in FIG. 7 and FIG. 8.

The transceiver module 1101 is configured to receive third configuration information, where the third configuration information indicates the communication apparatus 1100 to feed back only a moment at which the communication apparatus 1100 receives a last data packet in a data packet set. The processing module 1102 is configured to: in a process in which the communication apparatus 1100 receives a first data packet set from a network device, control the transceiver module 1101 to send, to the network device based on the third configuration information, a moment at which the communication apparatus 1100 receives a last data packet in the first data packet set, where the moment at which the last data packet is received is used to determine transmission duration of the first data packet set.

In a possible design scheme, a data packet set of a first service includes the data packet set of the first service.

In a possible design scheme, the third configuration information is carried in an N1 message.

Optionally, the transceiver module 1101 may include a sending module (not shown in FIG. 11) and a receiving module (not shown in FIG. 11). The sending module is configured to implement a sending function of the communication apparatus 1100, and the receiving module is configured to implement a receiving function of the communication apparatus 1100.

Optionally, the communication apparatus 1100 may further include a storage module (not shown in FIG. 11), and the storage module stores a program or instructions. When the processing module 1102 executes the program or instructions, the communication apparatus 1100 is enabled to perform the functions of the terminal device or the UE in the methods shown in FIG. 7 and FIG. 8 in the foregoing methods.

It can be understood that the communication apparatus 1100 may be a terminal device, may be a chip (system) or another component or part that may be disposed in the terminal device, or may be an apparatus that includes the terminal device. This is not limited in this application.

In addition, for technical effects of the communication apparatus 1100, refer to the technical effects of the communication methods shown in FIG. 7 and FIG. 8. Details are not described herein again.

In still some embodiments, the communication apparatus 1100 is applicable to the communication system shown in FIG. 6, and performs functions of the user plane network element or the UPF in the methods shown in FIG. 9 and FIG. 10.

The processing module 1102 is configured to: in a process in which the transceiver module 1101 receives a first data packet set, determine a moment at which the communication apparatus 1100 receives a 1^{st} data packet in the first data packet set. The processing module 1102 is further configured to: in a process in which the transceiver module 1101 sends the first data packet set to a terminal device, determine a moment at which the communication apparatus 1100 sends a last data packet in the first data packet set. The processing module 1102 is further configured to determine transmission duration of the first data packet set based on the moment at which the communication apparatus 1100 receives the 1^{st} data packet in the first data packet set, the moment at which the communication apparatus 1100 sends the last data packet in the first data packet set, and duration during which data packets are transmitted from the communication apparatus 1100 to the terminal device.

In a possible design scheme, the transceiver module 1101 is further configured to receive first configuration information, where the first configuration information indicates that the communication apparatus 1100 needs to determine transmission duration of a data packet set, and the data packet set includes the first data packet set.

Optionally, the first configuration information indicates that the communication apparatus 1100 needs to determine transmission duration of a data packet set of a first service, and the data packet set of the first service includes the data packet set of the first service.

Optionally, the first configuration information further indicates at least one of the following: a moment at which the transmission duration of the data packet set starts to be determined, a moment at which the transmission duration of the data packet set stops being determined, or an interval between determining the transmission duration of the data packet set every two times.

Optionally, the communication apparatus 1100 is a user plane network element, and the first configuration information is carried in an N4 message corresponding to the user plane network element.

In a possible design scheme, the transceiver module 1101 is further configured to: when the transmission duration of the first data packet set is greater than a transmission duration threshold, send the transmission duration of the first data packet set, where the transmission duration threshold is transmission duration allowed by a data packet set of a first service, and the data packet set of the first service includes the data packet set of the first service.

Optionally, the transceiver module 1101 is further configured to receive second configuration information, where the second configuration information indicates at least one of the following: the transmission duration threshold or a reporting rule, and the reporting rule is used to indicate that transmission duration of a data packet set needs to be reported when the transmission duration of the data packet set is greater than the transmission duration threshold.

Further, the communication apparatus 1100 is a user plane network element, and the second configuration information is carried in an N4 message corresponding to the user plane network element.

Optionally, the first service includes at least one of the following: an extended reality XR service or a virtual reality VR service.

In a possible design scheme, the first data packet set is one of at least one data packet set included in a first frame.

Optionally, the transceiver module 1101 may include a sending module (not shown in FIG. 11) and a receiving module (not shown in FIG. 11). The sending module is configured to implement a sending function of the communication apparatus 1100, and the receiving module is configured to implement a receiving function of the communication apparatus 1100.

Optionally, the communication apparatus 1100 may further include a storage module (not shown in FIG. 11), and the storage module stores a program or instructions. When the processing module 1102 executes the program or instructions, the communication apparatus 1100 is enabled to perform the functions of the user plane network element or the UPF in the methods shown in FIG. 9 and FIG. 10 in the foregoing methods.

It can be understood that the communication apparatus 1100 may be a network device, for example, a user plane network element or a UPF, may be a chip (system) or another component or part that may be disposed in the network device, or may be an apparatus that includes the network device. This is not limited in this application.

In addition, for technical effects of the communication apparatus 1100, refer to the technical effects of the communication methods shown in FIG. 9 and FIG. 10. Details are not described herein again.

In yet some embodiments, the communication apparatus 1100 is applicable to the communication system shown in FIG. 6, and performs functions of the policy control network element or the PCF in the methods shown in FIG. 7 to FIG. 10.

The transceiver module 1101 is configured to receive service requirement information from an application function. The processing module 1102 is configured to control the transceiver module 1101 to send a policy and charging control PCC rule to a session management network element based on the service requirement information. The service requirement information includes information indicating that transmission duration of a data packet set needs to be determined, and the transmission duration of the data packet set is a time period from a moment at which a user plane network element receives a 1^{st} data packet in the data packet set to a moment at which a terminal device receives a last data packet in the data packet set. The PCC rule includes the information indicating that the transmission duration of the data packet set needs to be determined.

In a possible design scheme, the service requirement information further includes information indicating that transmission duration of a data packet set of a first service needs to be determined, and correspondingly the PCC rule includes the information indicating that the transmission duration of the data packet set of the first service needs to be determined.

In a possible design scheme, the service requirement information further includes at least one of the following: a transmission duration threshold or a reporting rule, the reporting rule is used to indicate that transmission duration of a data packet set needs to be reported when the transmission duration of the data packet set is greater than the transmission duration threshold, and correspondingly the PCC rule further includes at least one of the following: the transmission duration threshold or the reporting rule.

Optionally, the transceiver module 1101 may include a sending module (not shown in FIG. 11) and a receiving module (not shown in FIG. 11). The sending module is configured to implement a sending function of the communication apparatus 1100, and the receiving module is configured to implement a receiving function of the communication apparatus 1100.

Optionally, the communication apparatus 1100 may further include a storage module (not shown in FIG. 11), and the storage module stores a program or instructions. When the processing module 1102 executes the program or instructions, the communication apparatus 1100 is enabled to perform the functions of the policy control network element or the PCF in the methods shown in FIG. 7 to FIG. 10 in the foregoing methods.

It can be understood that the communication apparatus 1100 may be a network device, for example, a policy control network element or a PCF, may be a chip (system) or another component or part that may be disposed in the network device, or may be an apparatus that includes the network device. This is not limited in this application.

In addition, for technical effects of the communication apparatus 1100, refer to the technical effects of the communication methods shown in FIG. 7 and FIG. 10. Details are not described herein again.

In some other embodiments, the communication apparatus 1100 is applicable to the communication system shown in FIG. 6, and performs functions of the session management network element or the SMF in the methods shown in FIG. 7 to FIG. 10.

The transceiver module 1101 is configured to receive a PCC rule from a policy control network element. The processing module 1102 is configured to control the transceiver module 1101 to send first configuration information to a user plane network element based on the PCC rule. The PCC rule includes information indicating that transmission duration of a data packet set needs to be determined, and the transmission duration of the data packet set is a time period from a moment at which the user plane network element receives a 1^{st} data packet in the data packet set to a moment at which a terminal device receives a last data packet in the data packet set. The first configuration information indicates that the user plane network element needs to determine the transmission duration of the data packet set.

In a possible design scheme, the PCC rule includes information indicating that transmission duration of a data packet set of a first service needs to be determined, and correspondingly the first configuration information indicates that the user plane network element needs to determine the transmission duration of the data packet set of the first service.

Optionally, the first configuration information further indicates at least one of the following: a moment at which the transmission duration of the data packet set of the first service starts to be determined, a moment at which the transmission duration of the data packet set of the first service stops being determined, or an interval between determining the transmission duration of the data packet set of the first service every two times.

Optionally, the first configuration information is carried in an N4 message corresponding to the user plane network element.

In a possible design scheme, the PCC rule further includes at least one of the following: a transmission duration threshold or a reporting rule, and the reporting rule is used to indicate that transmission duration of a data packet set needs to be reported when the transmission duration of the data packet set is greater than the transmission duration threshold. Correspondingly, the processing module 1102 is further configured to control the transceiver module 1101 to send second configuration information to the user plane network element based on the PCC rule, where the second configuration information indicates at least one of the following: the transmission duration threshold or the reporting rule.

Optionally, the second configuration information is carried in an N4 message corresponding to the user plane network element.

In a possible design scheme, the processing module 1102 is further configured to control the transceiver module 1101 to send third configuration information to the terminal device based on the PCC rule, where the third configuration information indicates the terminal device to feed back only a moment at which the terminal device receives a last data packet in a data packet set, and the moment at which the last data packet is received is used to determine transmission duration of the data packet set.

Optionally, the PCC rule includes information indicating that transmission duration of a data packet set of a first service needs to be determined, and correspondingly the third configuration information indicates the terminal device to feed back only a moment at which the terminal device receives a last data packet in the data packet set of the first service.

Optionally, the third configuration information is carried in an N1 message corresponding to the terminal device.

Optionally, the transceiver module 1101 may include a sending module (not shown in FIG. 11) and a receiving module (not shown in FIG. 11). The sending module is configured to implement a sending function of the communication apparatus 1100, and the receiving module is configured to implement a receiving function of the communication apparatus 1100.

Optionally, the communication apparatus 1100 may further include a storage module (not shown in FIG. 11), and the storage module stores a program or instructions. When the processing module 1102 executes the program or instructions, the communication apparatus 1100 is enabled to perform the functions of the session management network element or the SMF in the methods shown in FIG. 7 to FIG. 10 in the foregoing methods.

It can be understood that the communication apparatus 1100 may be a network device, for example, a session management network element or an SMF, may be a chip (system) or another component or part that may be disposed in the network device, or may be an apparatus that includes the network device. This is not limited in this application.

In addition, for technical effects of the communication apparatus 1100, refer to the technical effects of the communication methods shown in FIG. 7 and FIG. 10. Details are not described herein again.

FIG. 12 is a diagram 2 of a structure of a communication apparatus according to an embodiment of this application. For example, the communication apparatus may be a terminal, or may be a chip (system) or another component or part that may be disposed in the terminal. As shown in FIG. 12, a communication apparatus 1200 may include a processor 1201. Optionally, the communication apparatus 1200 may further include a memory 1202 and/or a transceiver 1203. The processor 1201, the memory 1202, and the transceiver 1203 are coupled to each other, for example, may be connected to each other through a communication bus.

The following specifically describes the components of the communication apparatus 1200 with reference to FIG. 12.

The processor 1201 is a control center of the communication apparatus 1200, and may be a processor or may be a generic term of a plurality of processing elements. For example, the processor 1201 is one or more central processing units (central processing units, CPUs), or may be an application-specific integrated circuit (application-specific integrated circuit, ASIC), or one or more integrated circuits configured to implement embodiments of this application, for example, one or more microprocessors (digital signal processors, DSPs) or one or more field programmable gate arrays (field programmable gate arrays, FPGAs).

Optionally, the processor 1201 may perform various functions of the communication apparatus 1200 by running or executing a software program stored in the memory 1202 and by invoking data stored in the memory 1202, for example, perform the communication methods shown in FIG. 7 to FIG. 10.

In a specific implementation, in an embodiment, the processor 1201 may include one or more CPUs, for example, a CPU 0 and a CPU 1 shown in FIG. 12.

In a specific implementation, in an embodiment, the communication apparatus 1200 may alternatively include a plurality of processors, for example, the processor 1201 and a processor 1204 shown in FIG. 12. Each of the processors may be a single-core processor (single-CPU), or may be a multi-core processor (multi-CPU). The processor herein may be one or more devices, circuits, and/or processing cores configured to process data (for example, computer program instructions).

The memory 1202 is configured to store a software program for performing the solutions of this application, and the processor 1201 controls execution of the software program. For a specific implementation, refer to the foregoing method embodiments. Details are not described herein again.

Optionally, the memory 1202 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, or the like), a magnetic disk storage medium, another magnetic storage device, or any other medium that can be used to carry or store expected program code in a form of instructions or a data structure and that is accessible to a computer. However, this is not limited thereto. The memory 1202 may be integrated with the processor 1201, or may exist independently, and is coupled to the processor 1201 through an interface circuit (not shown in FIG. 12) of the communication apparatus 1200. This is not specifically limited in embodiments of this application.

The transceiver 1203 is configured to communicate with another communication apparatus. For example, the communication apparatus 1200 is a terminal, and the transceiver 1203 may be configured to communicate with a network device or communicate with another terminal device. For another example, the communication apparatus 1200 is a network device, and the transceiver 1203 may be configured to communicate with a terminal or communicate with another network device.

Optionally, the transceiver 1203 may include a receiver and a transmitter (which are not separately shown in FIG. 12). The receiver is configured to implement a receiving function, and the transmitter is configured to implement a sending function.

Optionally, the transceiver 1203 may be integrated with the processor 1201, or may exist independently, and is coupled to the processor 1201 through the interface circuit (not shown in FIG. 12) of the communication apparatus 1200. This is not specifically limited in embodiments of this application.

It can be understood that the structure of the communication apparatus 1200 shown in FIG. 12 does not constitute any limitation on the communication apparatus. An actual communication apparatus may include more or fewer components than those shown in the figure, a combination of some components, or a different arrangement of the components.

In addition, for technical effects of the communication apparatus 1200, refer to the technical effects of the methods in the foregoing method embodiments. Details are not described herein again.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. The general-purpose processor may be a microprocessor, or the processor may be any conventional processor or the like.

It should also be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example rather than limitative description, many forms of random access memories (random access memories, RAMs) are available, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement the foregoing embodiments, all or some of the foregoing embodiments may be implemented in a form of a computer program product. The computer program product includes one or more computer instructions or a computer program. When the computer instructions or the computer program is loaded or executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that in this specification, a term "and/or" describes only an association relationship for describing associated objects, and indicates that three relationships may exist. For example, A and/or B may indicate the following three cases: Only A exists, both A and B exist, and only B exists. A and B each may be in a singular or plural form. In addition, a character "/" in this specification usually indicates an "or" relationship between associated objects, but may alternatively indicate an "and/or" relationship. For details, refer to a context for understanding.

In this application, at least one means one or more, and a plurality of means two or more. "At least one of the following items (pieces)" or a similar expression thereof means any combination of these items, including a singular item (piece) or any combination of plural items (pieces). For example, at least one item (piece) of a, b, or c may represent a, b, c, a-b, a-c, b-c, or a-b-c, where a, b, and c each may be in a singular or plural form.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art can be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It can be clearly understood by a person skilled in the art that, for the purpose of convenient and brief description, for detailed working processes of the system, apparatuses, and units described above, refer to the corresponding processes in the foregoing method embodiments. Details are not described herein again.

In the several embodiments provided in this application, it should be understood that the disclosed system, apparatuses, and methods may be implemented in other manners. For example, the described apparatus embodiments are merely examples. For example, division into units is merely logical function division and may be other division during actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical from, or another form.

The units described as separate parts may or may not be physically separate, and parts displayed as units may or may not be physical units. To be specific, the parts may be located in one position or may be distributed on a plurality of network units. Some or all of the units may be selected depending on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
in a process in which a network device receives a first data packet set, determining, by the network device, a moment at which the network device receives a 1^{st} data packet in the first data packet set;
sending, by the network device, the first data packet set to a terminal device;
receiving, by the network device, a moment at which the terminal device receives a last data packet in the first data packet set and that is returned by the terminal device; and
determining, by the network device, transmission duration of the first data packet set based on the moment at which the network device receives the 1^{st} data packet in the first data packet set and the moment at which the terminal device receives the last data packet in the first data packet set.

2. The method according to claim 1, wherein the method further comprises:
receiving, by the network device, first configuration information, wherein the first configuration information indicates that the network device needs to determine transmission duration of a data packet set, and the data packet set comprises the first data packet set.

3. The method according to claim 2, wherein
the first configuration information specifically indicates that the network device needs to determine transmission duration of a data packet set of a first service, and the data packet set of the first service comprises the first data packet set.

4. The method according to claim 2 or 3, wherein
the network device is a user plane network element, and the first configuration information is carried in an N4 message corresponding to the user plane network element.

5. The method according to claim 1, wherein the method further comprises:
when the transmission duration of the first data packet set is greater than a transmission duration threshold, reporting, by the network device, the transmission duration of the first data packet set, wherein the transmission duration threshold is transmission duration allowed by a data packet set of a first service, and the data packet set of the first service comprises the first data packet set.

6. The method according to claim 5, wherein the method further comprises:
receiving, by the network device, second configuration information, wherein the second configuration information indicates at least one of the following: the transmission duration threshold or a reporting rule, and the reporting rule is used to indicate that transmission duration of a data packet set needs to be reported when the transmission duration of the data packet set is greater than the transmission duration threshold.

7. The method according to claim 6, wherein
the network device is a user plane network element, and the second configuration information is carried in an N4 message corresponding to the user plane network element.

8. The method according to any one of claims 1 to 7, wherein
the first data packet set is one of at least one data packet set comprised in a first frame.

9. A communication method, wherein the method comprises:
receiving, by a terminal device, third configuration information, wherein the third configuration information indicates the terminal device to feed back only a moment at which the terminal device receives a last data packet in a data packet set; and
in a process in which the terminal device receives a first data packet set from a network device, sending, by the terminal device to the network device based on the third configuration information, a moment at which the terminal device receives a last data packet in the first data packet set, wherein the moment at which the last data packet is received is used to determine transmission duration of the first data packet set.

10. The method according to claim 9, wherein a data packet set of a first service comprises the first data packet set.

11. The method according to claim 9 or 10, wherein the third configuration information is carried in an N1 message.

12. A communication method, wherein the method comprises:
in a process in which a network device receives a first data packet set, determining, by the network device, a moment at which the network device receives a 1^{st} data packet in the first data packet set;
in a process in which the network device sends the first data packet set to a terminal device, determining, by the network device, a moment at which the network device sends a last data packet in the first data packet set; and
determining, by the network device, transmission duration of the first data packet set based on the moment at which the network device receives the 1^{st} data packet in the first data packet set, the moment at which the network device sends the last data packet in the first data packet set, and duration during which data packets are transmitted from the network device to the terminal device.

13. The method according to claim 12, wherein the method further comprises:
receiving, by the network device, first configuration information, wherein the first configuration information indicates that the network device needs to determine transmission duration of a data packet set, and the data packet set comprises the first data packet set.

14. The method according to claim 13, wherein
the first configuration information indicates that the network device needs to determine transmission duration of a data packet set of a first service, and the data packet set of the first service comprises the first data packet set.

15. The method according to any one of claims 12 to 14, wherein
the network device is a user plane network element, and the first configuration information is carried in an N4 message corresponding to the user plane network element.

16. The method according to claim 12, wherein the method further comprises:
when the transmission duration of the first data packet set is greater than a transmission duration threshold, reporting, by the network device, the transmission duration of the first data packet set, wherein the transmission duration threshold is transmission duration allowed by a data packet set of a first service, and the data packet set of the first service comprises the first data packet set.

17. The method according to claim 16, wherein the method further comprises:
receiving, by the network device, second configuration information, wherein the second configuration information indicates at least one of the following: the transmission duration threshold or a reporting rule, and the reporting rule is used to indicate that transmission duration of a data packet set needs to be reported when the transmission duration of the data packet set is greater than the transmission duration threshold.

18. The method according to claim 17, wherein
the network device is a user plane network element, and the second configuration information is carried in an N4 message corresponding to the user plane network element.

19. The method according to any one of claims 12 to 18, wherein
the first data packet set is one of at least one data packet set comprised in a first frame.

20. A communication method, wherein the method comprises:
receiving, by a policy control network element, service requirement information from an application function, wherein the service requirement information comprises information indicating that transmission duration of a data packet set needs to be determined, and the transmission duration of the data packet set is a time period from a moment at which a user plane network element receives a 1^{st} data packet in the data packet set to a moment at which a terminal device receives a last data packet in the data packet set; and
sending, by the policy control network element, a policy and charging control PCC rule to a session management network element based on the service requirement information, wherein the PCC rule comprises the information indicating that the transmission duration of the data packet set needs to be determined.

21. The method according to claim 20, wherein
the service requirement information comprises information indicating that transmission duration of a data packet set of a first service needs to be determined, and correspondingly the PCC rule comprises the information indicating that the transmission duration of the data packet set of the first service needs to be determined.

22. The method according to claim 20, wherein
the service requirement information further comprises at least one of the following: a transmission duration threshold or a reporting rule, the reporting rule is used to indicate that transmission duration of a data packet set needs to be reported when the transmission duration of the data packet set is greater than the transmission duration threshold, and the PCC rule further comprises at least one of the following: the transmission duration threshold or the reporting rule.

23. A communication method, wherein the method comprises:
receiving, by a session management network element, a PCC rule from a policy control network element, wherein the PCC rule comprises information indicating that transmission duration of a data packet set needs to be determined, and the transmission duration of the data packet set is a time period from a moment at which a user plane network element receives a 1^{st} data packet in the data packet set to a moment at which a terminal device receives a last data packet in the data packet set; and
sending, by the session management network element, first configuration information to the user plane network element based on the PCC rule, wherein the first configuration information indicates that the user plane network element needs to determine the transmission duration of the data packet set.

24. The method according to claim 23, wherein
the PCC rule comprises information indicating that transmission duration of a data packet set of a first service needs to be determined, and correspondingly the first configuration information indicates that the user plane network element needs to determine the transmission duration of the data packet set of the first service.

25. The method according to claim 23 or 24, wherein
the first configuration information is carried in an N4 message corresponding to the user plane network element.

26. The method according to claim 23, wherein
the PCC rule further comprises at least one of the following: a transmission duration threshold or a reporting rule, and the reporting rule is used to indicate that transmission duration of a data packet set needs to be reported when the transmission duration of the data packet set is greater than the transmission duration threshold; and
the method further comprises:
sending, by the session management network element, second configuration information to the user plane network element based on the PCC rule, wherein the second configuration information indicates at least one of the following: the transmission duration threshold or the reporting rule.

27. The method according to claim 26, wherein
the second configuration information is carried in an N4 message corresponding to the user plane network element.

28. The method according to claim 23, wherein the method further comprises:
sending, by the session management network element, third configuration information to the terminal device based on the PCC rule, wherein the third configuration information indicates the terminal device to feed back only a moment at which the terminal device receives a last data packet in a data packet set, and the moment at which the last data packet is received is used to determine transmission duration of the data packet set.

29. The method according to claim 28, wherein
the PCC rule comprises information indicating that transmission duration of a data packet set of a first service needs to be determined, and correspondingly the third configuration information indicates the terminal device to feed back only a moment at which the terminal device receives a last data packet in the data packet set of the first service.

30. The method according to claim 28 or 29, wherein
the third configuration information is carried in an N1 message corresponding to the terminal device.

31. A communication method, wherein the method comprises:
in a process in which a network device receives a first data packet set, determining, by the network device, a moment at which the network device receives a 1^{st} data packet in the first data packet set;
sending, by the network device, the first data packet set to a terminal device;
receiving, by the terminal device, third configuration information, wherein the third configuration information indicates the terminal device to feed back only a moment at which the terminal device receives a last data packet in a data packet set;
in a process in which the terminal device receives the first data packet set from the network device, sending, by the terminal device to the network device based on the third configuration information, a moment at which the terminal device receives a last data packet in the first data packet set, wherein the moment at which the last data packet is received is used to determine transmission duration of the first data packet set;
receiving, by the network device, the moment at which the terminal device receives the last data packet in the first data packet set and that is returned by the terminal device; and
determining, by the network device, the transmission duration of the first data packet set based on the moment at which the network device receives the 1^{st} data packet in the first data packet set and the moment at which the terminal device receives the last data packet in the first data packet set.

32. A communication method, wherein the method comprises:
receiving, by a policy control network element, service requirement information from an application function, wherein the service requirement information comprises information indicating that transmission duration of a data packet set needs to be determined, and the transmission duration of the data packet set is a time period from a moment at which a user plane network element receives a 1^{st} data packet in the data packet set to a moment at which a terminal device receives a last data packet in the data packet set;
sending, by the policy control network element, a policy and charging control PCC rule to a session management network element based on the service requirement information, wherein the PCC rule comprises the information indicating that the transmission duration of the data packet set needs to be determined;
receiving, by the session management network element, the PCC rule from the policy control network element, wherein the transmission duration of the data packet set is the time period from the moment at which the user plane network element receives the 1^{st} data packet in the data packet set to the moment at which the terminal device receives the last data packet in the data packet set; and
sending, by the session management network element, first configuration information to the user plane network element based on the PCC rule, wherein the first configuration information indicates that the user plane network element needs to determine the transmission duration of the data packet set.

33. A communication apparatus, wherein the apparatus comprises a module configured to perform the method according to any one of claims 1 to 8, or a module configured to perform the method according to any one of claims 12 to 19.

34. A communication apparatus, wherein the apparatus comprises a module configured to perform the method according to any one of claims 9 to 11.

35. A communication apparatus, wherein the apparatus comprises a module configured to perform the method according to any one of claims 20 to 22.

36. A communication apparatus, wherein the apparatus comprises a module configured to perform the method according to any one of claims 23 to 30.

37. A communication apparatus, wherein the communication apparatus comprises a processor and a memory, the memory is configured to store computer instructions, and when the processor executes the instructions, the communication apparatus is enabled to perform the method according to any one of claims 1 to 30.

38. A communication system, wherein the communication system comprises at least one of the following: a terminal device, a user plane network element, a policy control network element, or a session management network element, the user plane network element is configured to perform the method according to any one of claims 1 to 8 or 12 to 19, the terminal device is configured to perform the method according to any one of claims 9 to 11, the policy control network element is configured to perform the method according to any one of claims 20 to 22, and the session management network element is configured to perform the method according to any one of claims 23 to 30.

39. A computer-readable storage medium, wherein the computer-readable storage medium comprises a computer program or instructions, and when the computer program or instructions are run on a computer, the computer is enabled to perform the method according to any one of claims 1 to 30.
